(19)

Europäisches
Patentamt
European
Patent Office
Office européen
des brevets

(11) **EP 3 226 455 A1**

(12) **EUROPEAN PATENT APPLICATION**
published in accordance with Art. 153(4) EPC

(43) Date of publication:
**04.10.2017 Bulletin 2017/40**

(21) Application number: **15868956.2**

(22) Date of filing: **29.05.2015**

(51) Int Cl.:
**H04L 1/18** *(2006.01)*

(86) International application number:
**PCT/CN2015/080288**

(87) International publication number:
**WO 2016/095444 (23.06.2016 Gazette 2016/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.12.2014 PCT/CN2014/094209**

(71) Applicant: **Huawei Technologies Co., Ltd.**
**Longgang District**
**Shenzhen, Guangdong 518129 (CN)**

(72) Inventors:
• **HUANG, Wenwen**
**Shenzhen, Guangdong 518129 (CN)**
• **ZHAO, Yueying**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **WIRELESS DATA TRANSMISSION METHOD, NETWORK SIDE DEVICE, USER EQUIPMENT AND SYSTEM**

(57) Embodiments of the present invention disclose a wireless data transmission method, including: obtaining a repetition quantity required for data transmission of each user equipment in a management range, and determining a round trip time RTT of the user equipment according to obtained repetition quantity information of the user equipment, process quantity information of the user equipment, and a transmission time interval TTI. Because in the embodiments of the present invention, an RTT may be set according to a requirement, a length of the RTT may be adjusted in a range allowed by a delay. In addition, a repetition quantity required by a user equipment may be learned of by using repetition quantity information of the user equipment . Therefore, for a coverage capability of each user equipment , each RTT can include as few processes as possible, provided that a requirement of the user equipment for a repetition quantity is met. In this way, a probability of successful data decoding may be efficiently improved, thereby efficiently improving a coverage capability of user equipment in wireless communication.

FIG. 9

## Description

This application claims priority to PCT Patent Application No. PCT/CN2014/094209, filed with the Chinese Patent Office on December 18, 2014 and entitled "wireless data transmission method, network side device, user equipment, and system", which is incorporated herein by reference in its entirety.

## TECHNICAL FIELD

The present invention relates to the wireless communications field, and in particular, to a wireless data transmission method, a network side device, user equipment, and a system.

## BACKGROUND

In the wireless communications field, reliability of data transmission may be improved by retransmitting data. A data retransmission mechanism includes a hybrid automatic repeat request (Hybrid Automatic Repeat Request, HARQ) technology. An operation manner of the HARQ technology is generally as follows:

User equipment (User Equipment, UE) determines an HARQ process quantity in each frame of data according to a different transmission time interval (Transmission Time Interval, TTI) used for an enhanced dedicated physical data channel/enhanced dedicated physical control channel (Enhanced Dedicated Physical Data Channel/Enhanced Dedicated Physical Control Channel, E-DPDCH/E-DPCCH). For example, if a TTI used for the E-DPDCH/E-DPCCH is 10 ms, the HARQ process quantity is 4; or if a TTI used for the E-DPDCH/E-DPCCH is 2 ms, the HARQ process quantity is 8.

The user equipment sends data according to an allowed data rate.

The user equipment monitors E-DCH Hybrid ARQ Indicator Channel (E-DCH hybrid ARQ indicator channel, E-HICH) sent from all cells in an active set activated by an E-DCH. If any cell gives an explicit acknowledgement (ACK), the user equipment processes new data; or if no cell gives an explicit acknowledgement, the user equipment starts retransmission to retransmit original data.

To improve a signal-to-noise ratio of data to improve an uplink coverage capability, there is a TTI bundling (TTI bundling) technology in the prior art. In the TTI bundling technology, multiple consecutive uplink TTIs are bundled, so that data may be repeatedly sent a same specified quantity of times each time, a probability of correctly receiving data by the user equipment is improved, and the uplink coverage capability is improved.

Through study, the inventor finds that in the prior art, in a technical solution in which a coverage capability is improved by using the TTI bundling technology, improvement effect is limited for a coverage capability of user equipment that has a relatively large path loss. Consequently, communication quality of the user equipment is affected.

## SUMMARY

According to a wireless data transmission method, a network side device, user equipment, and a system provided in embodiments of the present invention, a coverage capability of a wireless communications terminal may be improved.

According to a first aspect, a wireless data transmission method is provided, including:

obtaining a repetition quantity required for data transmission of each user equipment in a management range; and determining a round trip time RTT of the user equipment according to obtained repetition quantity information of the user equipment, process quantity information of the user equipment, and a transmission time interval TTI.

In a first possible implementation manner of the first aspect, the determining an RTT of the user equipment according to obtained repetition quantity information of the user equipment, process quantity information, and a transmission time interval TTI includes:

presetting a process quantity of the user equipment; and determining the RTT of the user equipment by means of calculation according to the repetition quantity of the user equipment, the process quantity of the user equipment, and the TTI.

With reference to the first possible implementation manner of the first aspect, in a second possible implementation manner of the first aspect, when an enhanced dedicated physical data channel E-DPDCH and an enhanced dedicated physical control channel E-DPCCH in a hybrid automatic repeat request HARQ process are sent in a simultaneous sending manner, the determining the RTT of the user equipment by means of calculation according to the repetition quantity of the user equipment, the process quantity of the user equipment, and the TTI includes:

$$RTT=\text{Repetition quantity}*\text{Process quantity}*TTI.$$

With reference to the first possible implementation manner of the first aspect, in a third possible implementation manner of the first aspect, when an E-DPDCH and an E-DPCCH in an HARQ process are sent in a time division manner, the determining the RTT of the user equipment by means of calculation according to the repetition quantity of the user equipment, the process quantity of the user equipment, and the TTI includes:

$$RTT=(N1+N2+\text{padding})*\text{Process quantity}*TTI; \text{ where}$$

where N1 represents a repetition quantity of E-DPCCHs of the user equipment, N2 represents a repetition quantity of E-DPDCHs of the user equipment, padding represents a quantity of padding subframes, and padding$\geq$0.

In a fourth possible implementation manner of the first aspect, the determining an RTT of the user equipment according to obtained repetition quantity information of the user equipment, process quantity information, and a transmission time interval TTI includes:

determining the RTT of an HARQ according to a preset maximum repetition quantity, a preset minimum process quantity, and the TTI, where the maximum repetition quantity is not less than a maximum value in the repetition quantities of the user equipments in the management range of a network side device, and the minimum process quantity is a minimum quantity of processes in the RTT.

With reference to the fourth possible implementation manner of the first aspect, in a fifth possible implementation manner of the first aspect, the method includes:

determining, according to duration of the RTT and the repetition quantity of the user equipment, a maximum quantity of processes that can be included in the RTT of the user equipment.

With reference to the fourth possible implementation manner of the first aspect, in a sixth possible implementation manner of the first aspect, the maximum repetition quantity is the maximum value in the repetition quantities required for data transmission of all the user equipments in the management range of the network side device.

With reference to the fourth possible implementation manner of the first aspect, in a seventh possible implementation manner of the first aspect, the repetition quantity required for data transmission of the user equipment is:

a repetition quantity determined by the network side device according to a path loss parameter of the user equipment.

With reference to the fourth possible implementation manner of the first aspect, in an eighth possible implementation manner of the first aspect, when a TTI of data transmission is a TTI of 10 ms, the determining an RTT of an HARQ according to a maximum repetition quantity and a preset minimum process quantity includes:

$$RTT=\text{Minimum process quantity}*\text{Maximum repetition quantity}*10 \text{ ms.}$$

With reference to the fourth possible implementation manner of the first aspect, in a ninth possible implementation manner of the first aspect, when a TTI of data transmission is a TTI of 10 ms, that a maximum quantity of processes that can be included in each RTT of each user equipment is determined according to the repetition quantity required for data transmission of each user equipment and duration of the RTT includes:

$$\text{Maximum process quantity}=RTT/(\text{Repetition quantity}*10 \text{ ms}).$$

According to a second aspect, a wireless data transmission method is provided, including:

sending, by user equipment to a network side device, a repetition quantity required for data transmission; obtaining, by the user equipment, a round trip time RTT of the user equipment in a hybrid automatic repeat request HARQ, where the RTT is determined by the network side device according to obtained repetition quantity information of the user equipment, process quantity information of the user equipment, and a transmission time interval TTI; and

transmitting, by the user equipment, data to the network side device in the RRT according to the repetition quantity.

In a first possible implementation manner of the second aspect, the method further includes: after receiving a feedback message, obtaining, by the user equipment according to a preset frame timing relationship, a first frame number that is of a sent data frame and that is corresponding to the feedback message; where
when an enhanced dedicated physical data channel E-DPDCH and an enhanced dedicated physical control channel E-DPCCH in a hybrid automatic repeat request HARQ process are sent in a simultaneous sending manner, the frame timing relationship includes: First frame number of a sent data frame=First frame number of a feedback message-Repetition quantity-2; or
when an E-DPDCH and an E-DPCCH in an HARQ process are sent in a time division manner, and a channel sending sequence is that the E-DPCCH is first sent and then the E-DPDCH is sent, the frame timing relationship includes:
First frame number of a sent data frame=First frame number of a feedback message-N2-Padding-2; or
when an E-DPDCH and an E-DPCCH in an HARQ process are sent in a time division manner, and a channel sending sequence is that the E-DPDCH is first sent and then the E-DPCCH is sent, the frame timing relationship includes:

First frame number of a sent data frame=First frame number of a feedback message-N1-N2-Padding-2; where
N1 represents a repetition quantity of E-DPCCHs of the user equipment, N2 represents a repetition quantity of E-DPDCHs of the user equipment, padding represents a quantity of padding subframes, and padding$\geq$0.

In a second possible implementation manner of the second aspect, the method further includes:

when a feedback message corresponding to a first frame number of a sent data frame is a NACK, resending, at a corresponding process location in a next RTT cycle of the HARQ, process data corresponding to the first frame number of the sent data frame.

In a third possible implementation manner of the second aspect, the method further includes:

obtaining, by the user equipment, a maximum quantity of processes that can be included in the RTT of the user equipment in the HARQ, where the RTT is determined by the network side device according to a preset maximum repetition quantity and a preset minimum process quantity, the maximum repetition quantity is not less than a maximum value in repetition quantities required for sending data by user equipments in a management range of the network side device, the minimum process quantity is a minimum quantity of processes in the RTT, and duration of the RTT is used together with the repetition quantity of the user equipment to determine the maximum quantity of processes that can be included in the RTT of the user equipment, and the transmitting, by the user equipment, data to the network side device in the RRT according to the repetition quantity includes:

transmitting, by the user equipment, data to the network side device in the RRT according to the maximum process quantity.

With reference to the third possible implementation manner of the second aspect, in a fourth possible implementation manner of the second aspect, the obtaining the maximum process quantity includes:

obtaining, by the user equipment, the maximum process quantity sent from the network side device; or
generating, by the user equipment, the maximum process quantity by means of calculation.

With reference to the third possible implementation manner of the second aspect, in a fifth possible implementation manner of the second aspect, the maximum repetition quantity is the maximum value in the repetition quantities required for data transmission of all the user equipments in the management range of the network side device.
With reference to the third possible implementation manner of the second aspect, in a sixth possible implementation manner of the second aspect, the user equipment includes:

a path loss parameter obtaining module, configured to determine the repetition quantity according to a path loss parameter of the user equipment.

With reference to the third possible implementation manner of the second aspect, in a seventh possible implementation manner of the second aspect, when a TTI of data transmission is a TTI of 10 ms, that the RTT of the HARQ is determined according to a maximum repetition quantity and a preset minimum process quantity includes:

$$RTT=\text{Minimum process quantity}*\text{Maximum repetition quantity}*10\ ms.$$

With reference to the third possible implementation manner of the second aspect, in an eighth possible implementation manner of the second aspect, when a TTI of data transmission is a TTI of 10 ms, that a maximum quantity of processes that can be included in each RTT of each user equipment is determined according to the repetition quantity required for data transmission of each user equipment and duration of the RTT includes:

$$\text{Maximum process quantity}=RTT/(\text{Repetition quantity}*10\ ms).$$

With reference to the third possible implementation manner of the second aspect, in a ninth possible implementation manner of the second aspect, the method further includes:

after receiving a feedback message, obtaining, by the user equipment according to a preset frame timing relationship, a first frame number that is of a sent data frame and that is corresponding to the feedback message; where
the frame timing relationship includes: First frame number of a sent data frame=First frame number of a feedback message-Repetition quantity-2.

With reference to the ninth possible implementation manner of the second aspect, in a tenth possible implementation manner of the second aspect, the method further includes:

when the feedback message corresponding to the first frame number of the sent data frame is a NACK, resending, at a preset retransmission location, process data corresponding to the first frame number of the sent data frame; where the preset retransmission location includes:

when a length of the RTT is 160 ms, the repetition quantity is 8, and the process quantity is 2, or when a length of the RTT is 80 ms, the repetition quantity is 4, and the process quantity is 2, or when a length of the RTT is 40 ms, the repetition quantity is 2, and the process quantity is 2, the preset retransmission location is:

$$\text{Retransmission RTT number}=\text{RTT number corresponding to a sent data frame}+2.$$

With reference to any one of the second aspect, or the first to the tenth possible implementation manners of the second aspect, in an eleventh possible implementation manner of the second aspect, the wireless data transmission method is applied to wireless data transmission of a machine-to-machine M2M service.
According to a third aspect, a network side device is provided, including:

a repetition quantity obtaining unit, configured to obtain a repetition quantity required for data transmission of each user equipment in a management range; and
an RTT determining unit, configured to determine a round trip time RTT of the user equipment according to obtained repetition quantity information of the user equipment, process quantity information of the user equipment, and a transmission time interval TTI.

In a first possible implementation manner of the third aspect, the RTT determining unit includes:

a process quantity setting module, configured to preset a process quantity of the user equipment; and
an RTT calculation module, configured to determine the RTT of the user equipment by means of calculation according to the repetition quantity of the user equipment, the process quantity of the user equipment, and the TTI.

In a second possible implementation manner of the third aspect, when an enhanced dedicated physical data channel E-DPDCH and an enhanced dedicated physical control channel E-DPCCH in a hybrid automatic repeat request HARQ process are sent in a simultaneous sending manner, a formula used by the RTT determining module to determine the RTT of the user equipment by means of calculation includes:

$$RTT=\text{Repetition quantity}*\text{Process quantity}*TTI.$$

In a third possible implementation manner of the third aspect, when an E-DPDCH and an E-DPCCH in an HARQ process are sent in a time division manner, a formula used by the RTT determining module to determine the RTT of the user equipment includes:

$$RTT=(N1+N2+padding)*Process\ quantity*TTI; where$$

where N1 represents a repetition quantity of E-DPCCHs of the user equipment, N2 represents a repetition quantity of E-DPDCHs of the user equipment, padding represents a quantity of padding subframes, and padding≥0.

In a fourth possible implementation manner of the third aspect, the RTT determining unit includes: an RTT obtaining unit, configured to determine the round trip time RTT of a hybrid automatic repeat request HARQ according to a preset maximum repetition quantity, a preset minimum process quantity, and the transmission time interval TTI, where the maximum repetition quantity is not less than a maximum value in repetition quantities required for data transmission of the user equipments in the management range of the network side device, the minimum process quantity is a minimum quantity of processes in the RTT, and duration of the RTT is used together with the repetition quantity of the user equipment to determine a maximum quantity of processes that can be included in the RTT of the user equipment.

In a fifth possible implementation manner of the third aspect, the maximum repetition quantity is a maximum value in repetition quantities required for data transmission of all the user equipments in the management range of the network side device.

In a sixth possible implementation manner of the third aspect, the repetition quantity required for data transmission of the user equipment is:

a repetition quantity determined by the network side device according to a path loss parameter of the user equipment.

In a seventh possible implementation manner of the third aspect, when a TTI of data transmission is a TTI of 10 ms, that the RTT of an HARQ is determined according to a maximum repetition quantity and a preset minimum process quantity includes:

$$RTT=Minimum\ process\ quantity*Maximum\ repetition\ quantity*10\ ms.$$

In an eighth possible implementation manner of the third aspect, when a TTI of data transmission is a TTI of 10 ms, that a maximum quantity of processes that can be included in each RTT of each user equipment is determined according to the repetition quantity required for data transmission of each user equipment and duration of the RTT includes:

$$Maximum\ process\ quantity=RTT/(Repetition\ quantity*10\ ms).$$

According to a fourth aspect, user equipment is provided, including:

a repetition quantity sending unit, configured to send, by the user equipment to a network side device, a repetition quantity required for data transmission;
an RTT receiving unit, configured to obtain a round trip time RTT of the user equipment in a hybrid automatic repeat request HARQ, where the RTT is determined by the network side device according to obtained repetition quantity information of the user equipment, process quantity information of the user equipment, and a transmission time interval TTI; and
a data transmission unit, configured to transmit data to the network side device in the RRT according to the repetition quantity.

In a first possible implementation manner of the fourth aspect, the user equipment further includes:

a unit for obtaining a first frame number of a sent data frame, configured to: after receiving a feedback message, obtain, according to a preset frame timing relationship, a first frame number that is of a sent data frame and that is corresponding to the feedback message; where
when an enhanced dedicated physical data channel E-DPDCH and an enhanced dedicated physical control channel E-DPCCH in a hybrid automatic repeat request HARQ process are sent in a simultaneous sending manner, the frame timing relationship includes: First frame number of a sent data frame=First frame number of a feedback message-Repetition quantity-2; or
when an E-DPDCH and an E-DPCCH in a hybrid automatic repeat request HARQ process are sent in a time division manner, and a channel sending sequence is that the E-DPCCH is first sent and then the E-DPDCH is sent, the frame timing relationship includes:

First frame number of a sent data frame=First frame number of a feedback message-N2-Padding-2; or
when an E-DPDCH and an E-DPCCH in a hybrid automatic repeat request HARQ process are sent in a time division manner, and a channel sending sequence is that the E-DPDCH is first sent and then the E-DPCCH is sent, the frame timing relationship includes:

First frame number of a sent data frame=First frame number of a feedback message-N1-N2-Padding-2; where N1 represents a repetition quantity of E-DPCCHs of the user equipment, N2 represents a repetition quantity of E-DPDCHs of the user equipment, padding represents a quantity of padding subframes, and padding$\geq$0.

In a second possible implementation manner of the fourth aspect, the user equipment further includes:

a process data resending unit, configured to: when a feedback message corresponding to a first frame number of a sent data frame is a NACK, resend, at a corresponding process location in a next RTT cycle of the HARQ, process data corresponding to the first frame number of the sent data frame.

In a third possible implementation manner of the fourth aspect, the user equipment further includes:

a maximum process quantity obtaining unit, configured to obtain a maximum quantity of processes that can be included in the round trip time RTT of the user equipment in the hybrid automatic repeat request HARQ, where the RTT is determined by the network side device according to a preset maximum repetition quantity and a preset minimum process quantity, the maximum repetition quantity is not less than a maximum value in repetition quantities required for sending data by user equipments in a management range of the network side device, the minimum process quantity is a minimum quantity of processes in the RTT, and duration of the RTT is used together with the repetition quantity of the user equipment to determine the maximum quantity of processes that can be included in the RTT of the user equipment; where
the data transmission unit is configured to transmit data to the network side device in the RRT according to the maximum process quantity.

With reference to the third possible implementation manner of the fourth aspect, in a fourth possible implementation manner of the fourth aspect, the repetition quantity sending unit includes:

a path loss parameter obtaining module, configured to determine the repetition quantity according to a path loss parameter of the user equipment.

With reference to the third possible implementation manner of the fourth aspect, in a fifth possible implementation manner of the fourth aspect, the maximum process quantity obtaining unit includes:

a maximum process quantity receiving module, configured to receive the maximum process quantity sent from the network side device; or
a maximum process quantity calculation module, configured to generate the maximum process quantity by means of calculation.

With reference to the third possible implementation manner of the fourth aspect, in a sixth possible implementation manner of the fourth aspect, the maximum repetition quantity is the maximum value in the repetition quantities required for data transmission of all the user equipments in the management range of the network side device.
With reference to the third possible implementation manner of the fourth aspect, in a seventh possible implementation manner of the fourth aspect, the repetition quantity required for data transmission of the user equipment is:

a repetition quantity determined by the network side device according to a path loss parameter of the user equipment.

With reference to the third possible implementation manner of the fourth aspect, in an eighth possible implementation manner of the fourth aspect, when a TTI of data transmission is a TTI of 10 ms, that the RTT of the HARQ is determined according to a maximum repetition quantity and a preset minimum process quantity includes:

$$RTT = \text{Minimum process quantity} * \text{Maximum repetition quantity} * 10 \text{ ms.}$$

With reference to the third possible implementation manner of the fourth aspect, in a ninth possible implementation manner of the fourth aspect, when a TTI of data transmission is a TTI of 10 ms, that a maximum quantity of processes that can be included in each RTT of each user equipment is determined according to the repetition quantity required for data transmission of each user equipment and duration of the RTT includes:

$$\text{Maximum process quantity} = RTT / (\text{Repetition quantity} * 10 \text{ ms}).$$

With reference to the third possible implementation manner of the fourth aspect, in a tenth possible implementation manner of the fourth aspect, the user equipment further includes:

a first frame number obtaining unit, configured to: after receiving a feedback message, obtain, according to a preset frame timing relationship, a first frame number that is of a sent data frame and that is corresponding to the feedback message; where
the frame timing relationship includes: First frame number of a sent data frame=First frame number of a feedback message-Repetition quantity-2.

With reference to the third possible implementation manner of the fourth aspect, in an eleventh possible implementation manner of the fourth aspect, the user equipment further includes:

a retransmission unit, configured to: when the feedback message corresponding to the first frame number of the sent data frame is a NACK, resend, at a preset retransmission location, process data corresponding to the first frame number of the sent data frame; where
the preset retransmission location includes:

when a length of the RTT is 160 ms, the repetition quantity is 8, and the process quantity is 2, or when a length of the RTT is 80 ms, the repetition quantity is 4, and the process quantity is 2, or when a length of the RTT is 40 ms, the repetition quantity is 2, and the process quantity is 2, the preset retransmission location is:

$$\text{Retransmission RTT number} = \text{RTT number corresponding to a sent data frame} + 2.$$

With reference to any one of the fourth aspect, or the first to the eleventh possible implementation manners of the fourth aspect, in a twelfth possible implementation manner of the fourth aspect, the user equipment is applied to wireless data transmission of a machine-to-machine M2M service.
According to a fifth aspect, a wireless data transmission system is provided, including a network side device and user equipment, where
the network side device is the network side device according to any one of the third aspect, or the first to the eighth possible implementation manners of the third aspect, and
the user equipment is the user equipment according to any one of the fourth aspect, or the first to the twelfth possible implementation manners of the fourth aspect.
Because in the embodiments of the present invention, an RTT may be set according to a requirement, a length of the RTT may be adjusted in a range allowed by a delay. In addition, a repetition quantity required by a user equipment may be learned of by using repetition quantity information of the user equipment. Therefore, for a coverage capability of each user equipment , each RTT can include as few processes as possible, provided that a requirement of the user equipment for a repetition quantity is met. In this way, a probability of successful data decoding may be efficiently improved, thereby efficiently improving a coverage capability of user equipment in wireless communication. In addition, in the embodiments of the present invention, user equipment may also adjust an HARQ process quantity according to a repetition quantity currently required by the user equipment, so that a delay of data transmission can be reduced while full use of a resource is ensured, thereby improving communication efficiency.
In the embodiments of the present invention, an RTT whose duration can meet repetition quantities required for data transmission of all user equipments in a management range of a network side device may be first preset. Then, according to a different repetition quantity required for data transmission of each user equipment, each RTT accommodates as many processes as possibl (that is, multiple processes that have different process numbers) as possible, provided that the repetition quantity required for data transmission of the user equipment is met. In the embodiments of the present invention, a currently required repetition quantity determined by each user equipment according to coverage information such as a path loss of the user equipment is a repetition quantity that can meet a repetition quantity required for data transmission of the user equipment. Therefore, a probability of successful data decoding may be efficiently improved, thereby efficiently improving a coverage capability of user equipment in wireless communication.

In addition, in the embodiments of the present invention, user equipment may also adjust an HARQ process quantity according to a repetition quantity currently required by the user equipment, so that a code resource of an uplink channel can be fully used while a coverage capability of user equipment in wireless communication is ensured.

BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a step diagram of a wireless data transmission method according to an embodiment of the present invention;
FIG. 2 is another step diagram of a wireless data transmission method according to an embodiment of the present invention;
FIG. 3 is another step diagram of a wireless data transmission method according to an embodiment of the present invention;
FIG. 4 is a schematic structural diagram of a wireless data transmission system according to an embodiment of the present invention;
FIG. 5 is a schematic structural diagram of a network side device for wireless data transmission according to an embodiment of the present invention;
FIG. 6 is a schematic structural diagram of user equipment for wireless data transmission according to an embodiment of the present invention;
FIG. 7 is a schematic structural diagram of hardware of a network side device for wireless data transmission according to an embodiment of the present invention;
FIG. 8 is a schematic structural diagram of hardware of user equipment for wireless data transmission according to an embodiment of the present invention;
FIG. 9 is another step diagram of a wireless data transmission method according to an embodiment of the present invention;
FIG. 10 is a schematic diagram of setting, by using a wireless data transmission method, processes of user equipments that have different coverage capabilities according to an embodiment of the present invention;
FIG. 11 is a schematic diagram of setting processes in different scenarios by using a wireless data transmission method according to an embodiment of the present invention;
FIG. 12 is another schematic diagram of setting processes in different scenarios by using a wireless data transmission method according to an embodiment of the present invention;
FIG. 13 is another schematic structural diagram of a wireless data transmission system according to an embodiment of the present invention;
FIG. 14 is another schematic structural diagram of a network side device for wireless data transmission according to an embodiment of the present invention;
FIG. 15 is another schematic structural diagram of user equipment for wireless data transmission according to an embodiment of the present invention;
FIG. 16 is another schematic structural diagram of hardware of a network side device for wireless data transmission according to an embodiment of the present invention; and
FIG. 17 is another schematic structural diagram of hardware of user equipment for wireless data transmission according to an embodiment of the present invention.

**DESCRIPTION OF EMBODIMENTS**

To make persons skilled in the art understand the technical solutions in the present invention better, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

Optionally, a wireless data transmission method in the embodiments of the present invention is applicable to a Global System for Mobile Communications (Global System of Mobile Communication, GSM) system, a Universal Mobile Telecommunications System (Universal Mobile Telecommunications System, UMTS), or a Long Term Evolution (Long Term Evolution, LTE) system. Optionally, the wireless data transmission method in the embodiments of the present invention is applicable to an application scenario in which a delay requirement is not high, for example, may be applied to a scenario of a machine-to-machine (Machine to Machine, M2M) service.

Through long term study, the inventor finds that, in an existing TTI bundling (TTI bundling) technology in the prior art, a coverage capability of user equipment in wireless communications may be improved to some extent by bundling, in one RTT (Round trip time, round trip time), multiple repeated TTIs (Transmission Time Interval, transmission time interval) that have same content. However, in the prior art, a limited length of an RTT leads to a limited quantity of repeated TTIs that can be bundled. Consequently, further improvement of the coverage capability of the user equipment is limited. In the embodiments of the present invention, the coverage capability refers to a distance range in which a base station and user equipment can normally communicate.

Based on the foregoing findings in the study, a main idea in the embodiments of the present invention includes: Duration of an RTT is designed based on a requirement of user equipment for a quantity of repeated TTIs in wireless communication, so that a quantity of repeated TTIs in each RTT may meet the requirement of the user equipment in wireless communication, thereby improving a coverage capability.

With reference to accompanying drawings, the following describes in detail a wireless data transmission method and system in the present invention by using embodiments.

**Embodiment 1**

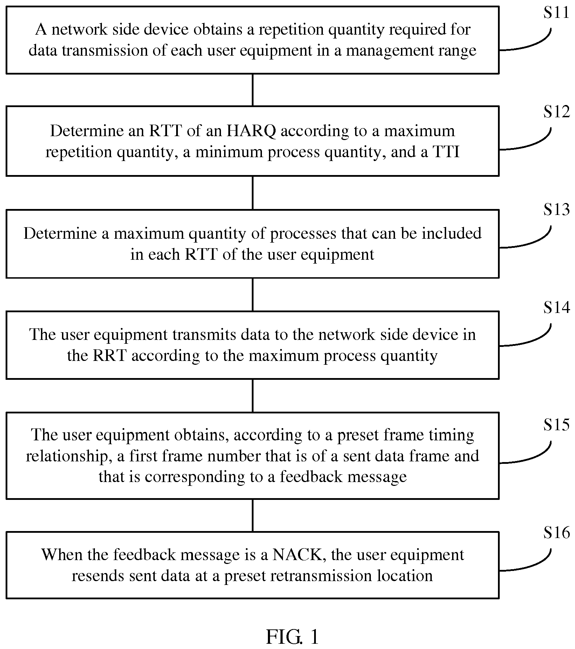

Referring to FIG. 1, FIG. 1 is a step diagram of Embodiment 1 of a wireless data transmission method according to an embodiment of the present invention.

S11. A network side device obtains a repetition quantity required for data transmission of each user equipment in a management range.

In each embodiment of the present invention, the repetition quantity required for sending data by each user equipment is a TTI repetition quantity required for obtaining a relatively large coverage area by each user equipment. Optionally, the user equipment may send the repetition quantity to the network side device after determining the repetition quantity required for data transmission of the user equipment.

In a PCT application No. PCT/CN2014/085932 whose application date is September 4, 2014, a technical solution to obtaining a repetition quantity required for sending data by user equipment is provided, and a specific technical solution to obtaining the repetition quantity required for sending data by the user equipment is described. The application mainly describes how to determine, by using a path loss parameter of each user equipment, a repetition quantity required for sending data by the user equipment.

Optionally, the network side device may include multiple base stations configured to implement communication data exchange with the user equipment in the management range.

All the user equipments in the management range are at different geographical positions. For example, distances between all the user equipments and the network side device are different, and/or obstacles in transmission paths between the user equipments and the network side device are different, and therefore each user equipment has a different path loss. In this case, when reaching a specified coverage capability, each user equipment needs a different repetition quantity when sending data. By setting a correspondence between a path loss level and a repetition quantity, a repetition quantity required when user equipment at each path loss level reaches a preset coverage capability may be obtained.

Generally, when there is the correspondence between a path loss level and a repetition quantity, a corresponding repetition quantity can be obtained by obtaining a path loss parameter of the user equipment.

Optionally, signal strength of all the user equipments is unnecessarily the same. Therefore, when the repetition quantity is determined, a signal strength level of the user equipment may be used as a parameter for calculation. Specifically, when a high signal level represents high signal strength, user equipment with a high signal level needs a smaller repetition quantity than user equipment with a low signal level.

A specific manner of calculating the repetition quantity may be other different manners used by persons skilled in the art according to actual requirements, or may be obtained by means of experiments, and this is not specifically limited herein. This application makes description by using the correspondence between a path loss and a repetition quantity as an example.

S12. Determine a round trip time RTT of a hybrid automatic repeat request HARQ according to a preset maximum repetition quantity, a preset minimum process quantity, and a TTI, where the maximum repetition quantity is not less than a maximum value in repetition quantities required for data transmission of the user equipments in the management range of the network side device, and the minimum process quantity is a minimum quantity of processes in the RTT.

The repetition quantity required for sending data by each user equipment in the management range of the network side device only represents a repetition quantity required by each user equipment. User equipment in all the user equipments that needs a maximum repetition quantity has a greatest path loss. Therefore, when a unified RTT of the HARQ is determined, and when a standard that user equipment that has a greatest path loss reaches a preset coverage capability is used, the RTT needs to be set according to the maximum value in the repetition quantities. That is, the maximum repetition quantity is set to not less than the maximum value in the repetition quantities required for sending data by all the user equipments in the management range of the network side device, thereby ensuring that the repetition quantity required by each user equipment is met. Optionally, the maximum value in the repetition quantities required for sending data by all the user equipments in the management range of the network side device is used as the maximum repetition quantity.

Optionally, the network side device receives the repetition quantities sent by the user equipments, and then uses, as the maximum repetition quantity, the maximum value in the repetition quantities required for sending data by the user equipments.

In addition, when the RTT is set, a quantity of processes constituted by sent frames/subframes further needs to be considered. Optionally, one RTT includes multiple processes that have different process numbers, and each process is constituted after a subframe or a frame is repeated a specified quantity of times. The specified quantity is the repeat quantity. For example, an RTT is "0000 1111 2222 3333 4444". Each digit represents a subframe or frame. Each subframe or frame is repeated four times to constitute a process. A process quantity of the RTT in this example is 5 (0, 1, 2, 3, and 4, which are totally 5).

In this embodiment of the present invention, all subframes or frames that have a same process number in an RTT are referred to as a process. A quantity of process numbers that can be included in an RTT is a quantity of processes in the RTT. In RTTs that have a same length, a process quantity is inversely proportional to a repetition quantity. That is, a larger repetition quantity indicates a smaller process quantity, and conversely, a smaller repetition quantity indicates a larger process quantity.

Therefore, a minimum quantity of processes in the RTT is set to ensure that while each RTT may accommodate a quantity of processes, a length of the RTT may also allow a repetition quantity required by the user equipment that has the greatest path loss, so that the user equipment reaches a specified coverage capability.

After the maximum repetition quantity and the minimum process quantity are determined, a length of the RTT of the HARQ may be determined according to a different TTI. Optionally, in order that the user equipment that has the greatest path loss reaches the specified coverage capability, when the TTI is a TTI of 10 ms, the length of the RTT of the HARQ may be set to: RTT=Minimum process quantity*Maximum repetition quantity*10 ms. For example, when the minimum process quantity is 2 and the maximum repetition quantity is 32, RTT=2*32*10 ms=640 ms; or when the minimum process quantity is 4 and the maximum repetition quantity is 4, RTT=4*4*10 ms=160 ms. By analogy, the length of the RTT of the HARQ may be obtained.

S 13. Determine, according to the repetition quantity required for data transmission of the user equipment and duration of the RTT, a maximum quantity of processes that can be included in each RTT of the user equipment.

After the length of the RTT of the HARQ is obtained, the network side device may determine, according to the repetition quantity required by each user equipment, the maximum quantity of processes that can be included in each RTT when the user equipment sends data. A maximum process quantity of each user equipment is calculated because the minimum process quantity is determined according to a standard that the user equipment that has the greatest path loss reaches the maximum repetition quantity. If each user equipment sends data by using the minimum process quantity, bandwidth of user equipment that has a relatively small path loss is inefficiently used, and data transmission efficiency is reduced.

Based on the foregoing reason, in this embodiment of the present invention, the network side device may calculate, according to a different required repetition quantity, the maximum quantity of processes that can be included in each RTT of each user equipment. Therefore, the process quantity increases as much as possible while the repetition quantity required by each user equipment is met, so that bandwidth of each user equipment may be fully used, and data transmission efficiency is improved.

In addition, optionally, the maximum quantity of processes that can be included in each RTT of each user equipment may be obtained by means of calculation by the user equipment.

For example, when the TTI is still the TTI of 10 ms, and when the maximum quantity of processes that can be included in each RTT of each user equipment is determined, a general manner may be: Maximum process quantity=RTT/(Repetition quantity*10 ms). For example, when the RTT is 640 ms and the repetition quantity is 8, maximum process quantity=640 ms/(8*10 ms)=8, that is, the maximum process quantity is 8.

In this step, the network side device may set the RTT after separately obtaining the repetition quantities of all the user equipments, and instruct all the user equipments to send data by using respective maximum process quantities.

Optionally, the network side device may also send the obtained length of the RTT of the HARQ to the user equipment. Each user equipment determines, according to the repetition quantity required by the user equipment, the maximum quantity of processes that can be included in each RTT when the user equipment sends data.

S14. The user equipment transmits data to the network side device in the RRT according to the maximum process quantity.

After obtaining the maximum process quantity of each user equipment, the user equipment may use the maximum process quantity as a quantity of processes that can be included in each RTT, and repeatedly set these processes according to the repetition quantity required by the user equipment, to establish a complete RRT, so that the user equipment may transmit data to the network side device.

Optionally, in this embodiment of the present invention, the method may further include the following step:

S15. After receiving a feedback message, the user equipment obtains, according to a preset frame timing relationship, a first frame number that is of a sent data frame and that is corresponding to the feedback message.

The frame timing relationship includes: First frame number of a sent data frame=First frame number of a feedback message-Repetition quantity-2.

Because in an HARQ technology, there is a probability that data is repeatedly sent, the network side device needs to deliver the feedback information (an ACK/NACK) to indicate a subsequent data sending behavior of the user equipment. After the user equipment receives the feedback information, when the feedback information is the ACK, it indicates that the network side device has correctly received data, and in this case, the user equipment may continue to send subsequent data. Alternatively, when the feedback information is the NACK, it indicates that the network side device does not correctly receive data (that is, a receiver performs error decoding), and the user equipment needs to resend the unsuccessfully sent data.

Therefore, after receiving the feedback information, the user equipment further needs to obtain, according to the preset frame timing relationship, the first frame number that is of the sent data frame and that is corresponding to the feedback message, so as to determine sent data corresponding to the feedback information.

Optionally, the first frame number that is of the sent data frame and that is corresponding to the feedback message may be obtained in the following manner:

First frame number of a sent data frame=First frame number of a feedback message-Repetition quantity-2. Specifically, because sending of the feedback message is later than sending of the sent data frame, when the first frame number of the sent data frame is obtained in a reverse manner by using the first frame number of the feedback message, a sending time of the sent data frame, a data processing time, and a feedback time of the feedback information need to be calculated. Therefore, starting from the first frame number of the sent data frame of the user equipment, sending of a data frame is completed after a process subframe is repeatedly sent a quantity of times, and then the feedback time of the feedback message, that is, two subframes are added, so that a frame number of a feedback message that is received by the user equipment and correspondingly feeds back a receiving status of sent data may be obtained. For example, when the first frame number of the sent data frame is 0008, and the repetition quantity is 8, the first frame number of the received feedback message should be 0008+8+2=0018. After the foregoing relationship between the first frame number of the feedback message and the first frame number of sent data is learned of, the first frame number that is of the sent data and that is corresponding to the feedback message may be obtained in a reverse manner according to the first frame number of the feedback message. That is, first frame number of a sent data frame=first frame number of a feedback message-repetition quantity-2.

Optionally, in this embodiment of the present invention, the method may further include the following step:

S16. When the feedback message corresponding to the first frame number of the sent data frame is a NACK, resend, at a preset retransmission location, process data corresponding to the first frame number of the sent data frame.

The preset retransmission location includes: when the length of the RTT is 160 ms, the repetition quantity is 8, and the process quantity is 2, or when the length of the RTT is 80 ms, the repetition quantity is 4, and the process quantity is 2, or when the length of the RTT is 40 ms, the repetition quantity is 2, and the process quantity is 2, the preset retransmission location is: Retransmission RTT number=RTT number corresponding to a sent data frame+2.

When content of the feedback message received by the user equipment is the NACK, the sent data corresponding to the feedback message needs to be resent. To avoid data mis-transmission, a retransmission location needs to be preset for data that needs to be resent. That is, the data corresponding to the first frame number of the sent data frame needs to be resent at the preset retransmission location.

Specifically, when the TTI is 10 ms, the preset retransmission location includes:

When the length of the RTT is 160 ms, the repetition quantity is 8, and the process quantity is 2, or when the length of the RTT is 80 ms, the repetition quantity is 4, and the process quantity is 2, or when the length of the RTT is 40 ms, the repetition quantity is 2, and the process quantity is 2, the preset retransmission location is: Retransmission RTT number=RTT number corresponding to a sent data frame+2.

An uplink HARQ is a synchronization transmission mechanism (for example, when data is sent in a process of a number 0, and the feedback message received by the user equipment is the NACK, the data can be retransmitted only in a process of a number 0 of a next RTT). If the user equipment does not receive the feedback message before a process of the next RTT, the user equipment needs to perform retransmission or new transmission in an RTT next to the next RTT. That is, retransmission RTT number=RTT number corresponding to a sent data frame+2. In addition to the foregoing several cases, generally, a data frame only needs to be resent in an RTT whose number is subsequent to an RTT number corresponding to the sent data frame. That is, retransmission RTT number=RTT number corresponding to a sent data frame+1.

Specifically, determining of the preset retransmission location may be shown in the following table:

| Maximum repetition factor N | HARQ RTT | Repetition factor K | Process quantity | Retransmission /new transmission location |
|---|---|---|---|---|
| 32 | 640 ms | 32 | 2 | +1 |
| | | 16 | 4 | +1 |
| | | 8 | 8 | +1 |
| | | 4 | 16 | +1 |
| | | 2 | 32 | +1 |
| 16 | 320 ms | 16 | 2 | +1 |
| | | 8 | 4 | +1 |
| | | 4 | 8 | +1 |
| | | 2 | 16 | +1 |
| 8 | 160 ms | 8 | 2 | +2 |
| | | 4 | 4 | +1 |
| | | 2 | 8 | +1 |
| 4 | 80 ms | 4 | 2 | +2 |
| | | 2 | 4 | +1 |
| 2 | 40 ms | 2 | 2 | +2 |

In actual application, the wireless data transmission method in this embodiment of the present invention may be applied to wireless data transmission of an M2M service. The M2M service is relatively insensitive to a data delay and may tolerate a relatively long delay. Therefore, an RTT of relatively long specified duration may be received. In addition, most user equipments in the M2M have relatively fixed positions, so that a path loss is also relatively stable. Therefore, a repetition quantity obtained by means of calculation may not frequently change due to a position change of the user equipment.

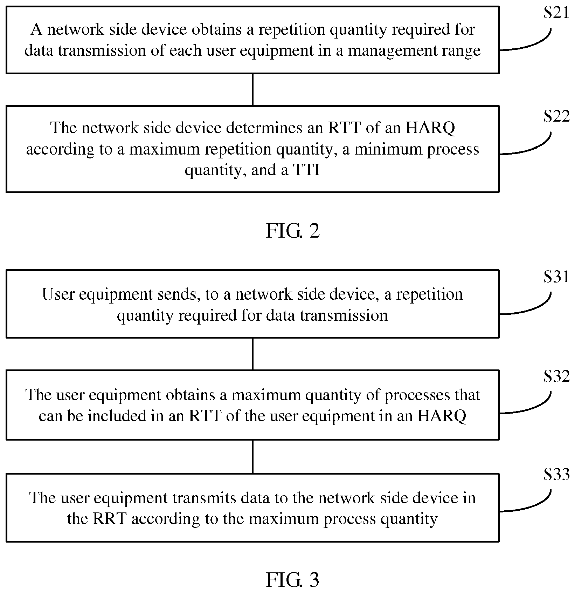

In this embodiment of the present invention, when a network side device serves as an execution body, specific steps of the wireless data transmission method may be shown in FIG. 2 and include:

S21. Obtain a repetition quantity required for data transmission of each user equipment in a management range.
S22. Determine a round trip time RTT of a hybrid automatic repeat request HARQ according to a preset maximum repetition quantity, a preset minimum process quantity, and a transmission time interval TTI, where the maximum repetition quantity is not less than a maximum value in the repetition quantities of the user equipments in the management range of the network side device, the minimum process quantity is a minimum quantity of processes in the RTT, and duration of the RTT is used together with the repetition quantity of the user equipment to determine a maximum quantity of processes that can be included in the RTT of the user equipment.

In the foregoing steps, explanations of a specific operation principle and a function of the network side device have been described in detail in steps S11 to S16, and details are not repeatedly described herein.

Similarly, in this embodiment of the present invention, when user equipment serves as an execution body, specific steps of the wireless data transmission method may be shown in FIG. 3 and include:

S31. The user equipment sends, to a network side device, a repetition quantity required for data transmission.

S32. The user equipment obtains a maximum quantity of processes that can be included in a round trip time RTT of the user equipment in a hybrid automatic repeat request HARQ, where the RTT is determined by the network side device according to a preset maximum repetition quantity and a preset minimum process quantity, the maximum repetition quantity is not less than a maximum value in repetition quantities required for sending data by user equipments in a management range of the network side device, the minimum process quantity is a minimum quantity of processes in the RTT, and duration of the RTT is used together with the repetition quantity of the user equipment to determine the maximum quantity of processes that can be included in the RTT of the user equipment.

S33. The user equipment transmits data to the network side device in the RRT according to the maximum process quantity.

Likewise, in the foregoing steps, explanations of a specific operation principle and a function of the user equipment have been described in detail in steps S11 to S16, and details are not repeatedly described herein.

**Embodiment 2**

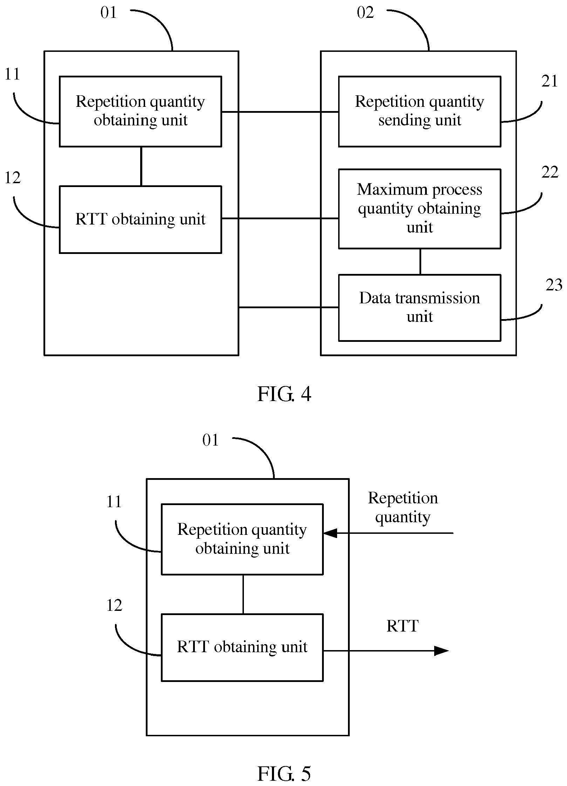

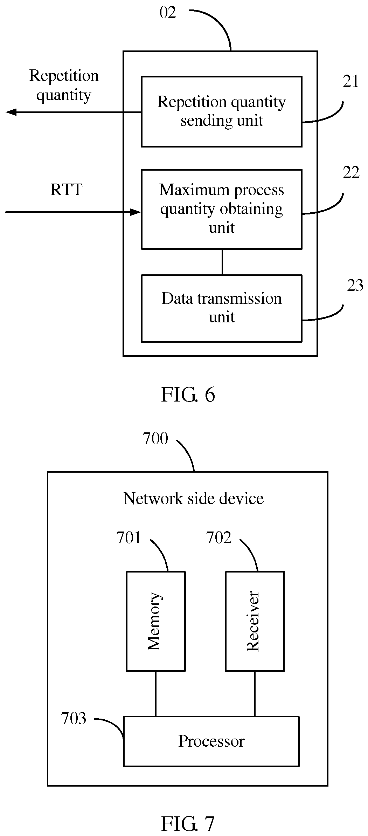

This embodiment of the present invention further provides a wireless data transmission system. A network side device and user equipment in the wireless data transmission system in this embodiment and the network side device and the user equipment in the wireless data transmission method in Embodiment 1 have corresponding operation manners and principles and similar functions. Specifically, as shown in FIG. 4, the wireless data transmission system includes a network side device 01 and user equipment 02. The network side device 01 is shown in FIG. 5, and includes a repetition quantity obtaining unit 11 and an RTT obtaining unit 12. The user equipment 02 is shown in FIG. 6, and includes a repetition quantity sending unit 21, a maximum process quantity obtaining unit 22, and a data transmission unit 23.

Specifically, the repetition quantity sending unit 21 of the user equipment 02 is configured to send, to the network side device, a repetition quantity required for data transmission.

Optionally, a repetition quantity required for sending data by each user equipment 02 may be specifically determined by using a path loss parameter obtaining module. After a path loss parameter of the user equipment 02 is obtained by using the path loss parameter obtaining module, the repetition quantity required for sending data by the user equipment 02 may be determined according to a preset correspondence between a path loss level and a repetition quantity.

After all the user equipments 02 send repetition quantities of all the user equipments 02 to the network side device 01 by using the repetition quantity sending unit 21, the network side device 01 may obtain the repetition quantities by using the repetition quantity obtaining unit 11.

The RTT obtaining unit 12 of the network side device 01 may determine a round trip time RTT of a hybrid automatic repeat request HARQ according to a preset maximum repetition quantity and a preset minimum process quantity. The maximum repetition quantity is not less than a maximum value in the repetition quantities required for data transmission of the user equipments 02 in a management range of the network side device 01. The minimum process quantity is a minimum quantity of processes in the RTT. Duration of the RTT is used together with the repetition quantity of the user equipment 02 to determine a maximum quantity of processes that can be included in the RTT of the user equipment 02.

The network side device 01 may determine the maximum repetition quantity according to the repetition quantities of all the user equipments 02 in the management range of the network side device. Optionally, the network side device 01 receives the repetition quantities sent by all the user equipments 02, and then uses, as the maximum repetition quantity, the maximum value in the repetition quantities of all the user equipments 02.

When the RTT is set, a quantity of processes constituted by sent frames/subframes further needs to be considered. In this embodiment of the present invention, all subframes or frames that have a same process number in an RTT are referred to as a process. A quantity of process numbers that can be included in an RTT is a quantity of processes in the RTT. In RTTs that have a same length, a process quantity is inversely proportional to a repetition quantity. That is, a larger repetition quantity indicates a smaller process quantity, and conversely, a smaller repetition quantity indicates a larger process quantity.

Therefore, a minimum quantity of processes in the RTT is set to ensure that while each RTT may accommodate a quantity of processes, a length of the RTT may also allow a repetition quantity required by user equipment that has a greatest path loss, so that the user equipment reaches a specified coverage capability.

After the maximum repetition quantity and the minimum process quantity are determined, a length of the RTT of the HARQ may be determined by using an RTT determining unit 12. Optionally, the RTT determining unit 12 may include an RTT determining mechanism. The RTT determining mechanism is a preset calculation formula. When a TTI is a TTI of 10 ms, the RTT determining mechanism may be: RTT=Minimum process quantity*Maximum repetition quantity*10 ms. For example, when the minimum process quantity is 2 and the maximum repetition quantity is 32, RTT=2*32*10 ms=640 ms; or when the minimum process quantity is 4 and the maximum repetition quantity is 4, RTT=4*4*10 ms=160 ms. By analogy, the length of the RTT of the HARQ may be obtained.

The maximum process quantity obtaining unit 22 is configured to obtain a maximum quantity of processes that can be included in the round trip time RTT of the user equipment in the hybrid automatic repeat request HARQ. The RTT is determined by the RTT obtaining unit 12 according to the preset maximum repetition quantity and the preset minimum process quantity. The maximum repetition quantity is not less than the maximum value in the repetition quantities required for sending data by the user equipments in the management range of the network side device. The minimum process quantity is the minimum quantity of processes in the RTT.

After the length of the RTT of the HARQ is obtained, the user equipment 02 may learn of a maximum process quantity of the user equipment 02 by using the maximum process quantity obtaining unit 22. A maximum process quantity of each user equipment is calculated because the minimum process quantity is determined according to a standard that the user equipment that has the greatest path loss reaches the maximum repetition quantity. If each user equipment sends data by using the minimum process quantity, data transmission efficiency of user equipment that has a relatively small path loss is obviously reduced.

Based on the foregoing reason, in this embodiment of the present invention, each user equipment may obtain, by means of calculation according to a different required repetition quantity, the maximum quantity of processes that can be included in each RTT of the user equipment. Therefore, the process quantity increases as much as possible while the repetition quantity required by each user equipment is met, so that transmission efficiency of data sent by each user equipment may be improved.

Optionally, in this embodiment of the present invention, the maximum process quantity may be obtained by using a maximum process quantity receiving module included in the maximum process quantity obtaining unit 22. That is, after the network side device generates a maximum process quantity for user equipment by means of calculation, the user equipment receives, by using the maximum process quantity receiving module, the maximum process quantity sent from the network side device. Alternatively, each user equipment may generate the maximum process quantity by means of calculation by using a maximum process quantity calculation module included in a maximum process quantity obtaining unit 22 of the user equipment.

For example, when the TTI is still the TTI of 10 ms, and the maximum quantity of processes that can be included in each RTT of each user equipment may be generally determined by using a formula: Maximum process quantity=RTT/(Repetition quantity*10 ms). For example, when the RTT is 640 ms and the repetition quantity is 8, maximum process quantity=640 ms/(8*10 ms)=8, that is, the maximum process quantity is 8.

The data transmission unit 23 is configured to transmit data to the network side device in the RRT according to the maximum process quantity.

After each user equipment obtains the maximum process quantity of the user equipment, the data transmission unit 23 may use the maximum process quantity as a quantity of processes that can be included in each RTT, and repeatedly set these processes according to the repetition quantity required by the user equipment, to establish a complete RRT, so that the user equipment may transmit data to the network side device.

Optionally, in this embodiment of the present invention, a first frame obtaining unit may also be included, and is configured to: after receiving a feedback message, obtain, according to a preset frame timing relationship, a first frame number that is of a sent data frame and that is corresponding to the feedback message. The frame timing relationship may include: First frame number of a sent data frame=First frame number of a feedback message-Repetition quantity-2.

Because in an HARQ technology, there is a probability that data is repeatedly sent, the network side device needs to deliver the feedback information (an ACK/NACK) to indicate a subsequent data sending behavior of the user equipment. After the user equipment receives the feedback information, when the feedback information is the ACK, it indicates that the network side device has correctly received data, and in this case, the user equipment may continue to send subsequent data. Alternatively, when the feedback information is the NACK, it indicates that the network side device does not correctly receive data (that is, a receiver performs error decoding), and the user equipment needs to resend the unsuccessfully sent data.

Therefore, after receiving the feedback information, the user equipment may obtain, according to the preset frame timing relationship by using the first frame number obtaining unit in this embodiment of the present invention, the first frame number that is of the sent data frame and that is corresponding to the feedback message, so as to determine sent data corresponding to the feedback information.

Optionally, the first frame number obtaining unit may obtain, in the following manner, the first frame number that is of the sent data frame and that is corresponding to the feedback message:

First frame number of a sent data frame=First frame number of a feedback message-Repetition quantity-2. Specifically, because sending of the feedback message is later than sending of the sent data frame, when the first frame number of the sent data frame is obtained in a reverse manner by using the first frame number of the feedback message, a sending time of the sent data frame, a data processing time, and a feedback time of the feedback information need to be calculated. Therefore, starting from the first frame number of the sent data frame of the user equipment, sending of a data frame is completed after a process subframe is repeatedly sent a quantity of times, and then the feedback time of the feedback message, that is, two subframes are added, so that a frame number of a feedback message that is received by the user equipment and correspondingly feeds back a receiving status of sent data may be obtained. For example, when the first frame number of the sent data frame is 0008, and the repetition quantity is 8, the first frame number of the received feedback message should be 0008+8+2=0018. After the foregoing relationship between the first frame number of the feedback message and the first frame number of sent data is learned of, the first frame number that is of the sent data and that is corresponding to the feedback message may be obtained in a reverse manner according to the first frame number of the feedback message. That is, first frame number of a sent data frame=first frame number of a feedback message-repetition quantity-2.

Optionally, in this embodiment of the present invention, a retransmission unit may also be included, and is configured to: when the feedback message corresponding to the first frame number of the sent data frame is the NACK, resend, at a preset retransmission location, process data corresponding to the first frame number of the sent data frame. The preset retransmission location may include: when the length of the RTT is 160 ms, the repetition quantity is 8, and the process quantity is 2, or when the length of the RTT is 80 ms, the repetition quantity is 4, and the process quantity is 2, or when the length of the RTT is 40 ms, the repetition quantity is 2, and the process quantity is 2, the preset retransmission location is: Retransmission RTT number=RTT number corresponding to a sent data frame+2.

When content of the feedback message received by the user equipment is the NACK, the sent data corresponding to the feedback message needs to be retransmitted by using the retransmission unit. To avoid data mistransmission, a retransmission location needs to be preset for data that needs to be resent. That is, the data corresponding to the first frame number of the sent data frame needs to be resent at the preset retransmission location.

Specifically, when the TTI is 10 ms, the preset retransmission location includes:

When the length of the RTT is 160 ms, the repetition quantity is 8, and the process quantity is 2, or when the length of the RTT is 80 ms, the repetition quantity is 4, and the process quantity is 2, or when the length of the RTT is 40 ms, the repetition quantity is 2, and the process quantity is 2, the preset retransmission location is: Retransmission RTT number=RTT number corresponding to a sent data frame+2.

An uplink HARQ is a synchronization transmission mechanism (for example, when data is sent in a process of a number 0, and the feedback message received by the user equipment is the NACK, the data can be retransmitted only in a process of a number 0 of a next RTT). If the user equipment does not receive the feedback message before a process of the next RTT, the user equipment needs to perform retransmission or new transmission in an RTT next to the next RTT. That is, retransmission RTT number=RTT number corresponding to a sent data frame+2. In addition to the foregoing several cases, generally, a data frame only needs to be resent in an RTT whose number is subsequent to an RTT number corresponding to the sent data frame. That is, retransmission RTT number=RTT number corresponding to a sent data frame+1.

Specifically, determining of the preset retransmission location may be shown in the following table:

| Maxi mum repetition factor N | HARQ RTT | Repeti tion factor K | Proce ss quantity | Retransmission /new transmission location |
|---|---|---|---|---|
| 32 | 640 ms | 32 | 2 | +1 |
| | | 16 | 4 | +1 |
| | | 8 | 8 | +1 |
| | | 4 | 16 | +1 |
| | | 2 | 32 | +1 |
| 16 | 320 ms | 16 | 2 | +1 |
| | | 8 | 4 | +1 |
| | | 4 | 8 | +1 |
| | | 2 | 16 | +1 |
| 8 | 160 ms | 8 | 2 | +2 |
| | | 4 | 4 | +1 |
| | | 2 | 8 | +1 |
| 4 | 80 ms | 4 | 2 | +2 |
| | | 2 | 4 | +1 |
| 2 | 40 ms | 2 | 2 | +2 |

In actual application, the wireless data transmission method in this embodiment of the present invention may be applied to wireless data transmission of an M2M service. The M2M service is relatively insensitive to a data delay and may tolerate a relatively long delay. Therefore, an RTT of relatively long specified duration may be received. In addition, most user equipments in the M2M have relatively fixed positions, so that a path loss is also relatively stable. Therefore, a repetition quantity obtained by means of calculation may not frequently change due to a position change of the user equipment.

**Embodiment 3**

Referring to FIG. 7, FIG. 7 is a schematic structural diagram of hardware of a network side device according to an embodiment of the present invention. The network side device may be configured to execute the wireless data transmission method in Embodiment 1. The network side device 700 includes a memory 701, a receiver 702, and a processor 703 separately connected to the memory 701 and the receiver 702. The memory 701 is configured to store a group of program instructions. The processor 703 is configured to invoke the program instructions stored in the memory 701 to perform the following operations:

triggering the receiver 702 to obtain a repetition quantity required for data transmission of each user equipment in a management range; and
determining a round trip time RTT of a hybrid automatic repeat request HARQ according to a preset maximum repetition quantity, a preset minimum process quantity, and a transmission time interval TTI, where the maximum repetition quantity is not less than a maximum value in the repetition quantities of the user equipments in the management range of the network side device, the minimum process quantity is a minimum quantity of processes in the RTT, and duration of the RTT is used together with the repetition quantity of the user equipment to determine a maximum quantity of processes that can be included in the RTT of the user equipment.

Optionally, the processor 703 may be a central processing unit (Central Processing Unit, CPU). The memory 701 may be an internal memory of a random access memory (Random Access Memory, RAM) type. The receiver 702 may include a common physical interface, and the physical interface may be an Ethernet (Ethernet) interface or an asynchronous transfer mode (Asynchronous Transfer Mode, ATM) interface. The processor 703, the receiver 702, and the memory 701 may be integrated into one or more independent circuits or hardware, for example, an application-specific integrated circuit (Application Specific Integrated Circuit, ASIC).

**Embodiment 4**

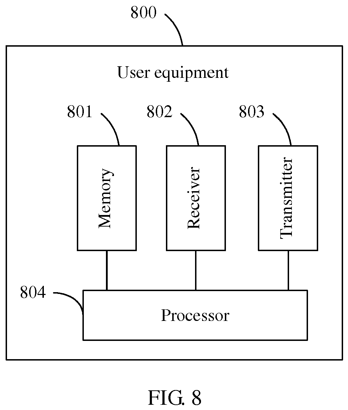

Referring to FIG. 8, FIG. 8 is a schematic structural diagram of hardware of user equipment according to an embodiment of the present invention. The user equipment may be configured to execute the wireless data transmission method in Embodiment 1. The user equipment 800 includes a memory 801, a receiver 802, a transmitter 803, and a processor 804 separately connected to the memory 801, the receiver 802, and the transmitter 803. The memory 801 is configured to store a group of program instructions. The processor 804 is configured to invoke the program instructions stored in the memory 801 to perform the following operations:

triggering the receiver 802 to send, to a network side device, a repetition quantity required for data transmission;
obtaining a maximum quantity of processes that can be included in a round trip time RTT of the user equipment in a hybrid automatic repeat request HARQ, where the RTT is determined by the network side device according to a preset maximum repetition quantity and a preset minimum process quantity, the maximum repetition quantity is not less than a maximum value in repetition quantities required for sending data by user equipments in a management range of the network side device, the minimum process quantity is a minimum quantity of processes in the RTT, and duration of the RTT is used together with the repetition quantity of the user equipment to determine the maximum quantity of processes that can be included in the RTT of the user equipment; and
triggering the transmitter 803 to transmit data to the network side device in the RRT according to the maximum repetition quantity.

Optionally, the processor 804 may be a central processing unit (Central Processing Unit, CPU). The memory 801 may be an internal memory of a random access memory (Random Access Memory, RAM) type. The receiver 802 and the transmitter 803 may include a common physical interface, and the physical interface may be an Ethernet (Ethernet) interface or an asynchronous transfer mode (Asynchronous Transfer Mode, ATM) interface. The processor 804, the transmitter 803, the receiver 802, and the memory 801 may be integrated into one or more independent circuits or hardware, for example, an application-specific integrated circuit (Application Specific Integrated Circuit, ASIC).

**Embodiment 5**

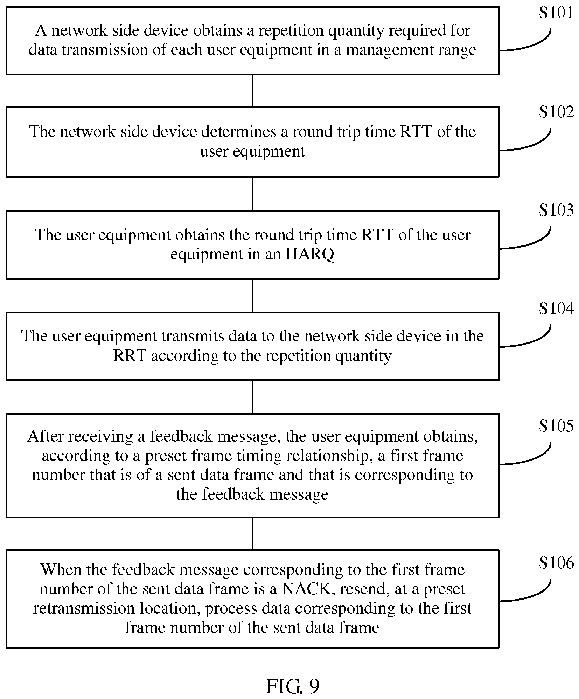

Referring to FIG. 9, FIG. 9 is a step diagram of Embodiment 5 of a wireless data transmission method according to an embodiment of the present invention.

S101. A network side device obtains a repetition quantity required for data transmission of each user equipment in a management range.

In each embodiment of the present invention, the repetition quantity required for sending data by each user equipment is a TTI repetition quantity required for obtaining a relatively large coverage area by each user equipment.

Optionally, the user equipment in the management range of the network side device may send the repetition quantity to the network side device after determining the repetition quantity required for data transmission of each user equipment, so that the network side device obtains the repetition quantity required for data transmission of each user equipment in the management range.

In an application No. PCT/CN2014/085932 whose application date is September 4, 2014, a technical solution to obtaining a repetition quantity required for sending data by user equipment is provided, and a specific technical solution to obtaining the repetition quantity required for sending data by the user equipment is described. The application mainly describes how to determine, by using a path loss parameter of each user equipment, a repetition quantity required for sending data by the user equipment.

Optionally, the network side device may include multiple base stations configured to implement communication data exchange with the user equipment in the management range.

All the user equipments in the management range are at different geographical positions. For example, distances between all the user equipments and the network side device are different, and/or obstacles in transmission paths between the user equipments and the network side device are different, so that each user equipment has a different path loss. In this case, when reaching a specified coverage capability, each user equipment needs a different repetition quantity when sending data. By setting a correspondence between a path loss level and a repetition quantity, a repetition quantity required when user equipment at each path loss level reaches a preset coverage capability may be obtained.

Generally, when there is the correspondence between a path loss level and a repetition quantity, a corresponding repetition quantity can be obtained by obtaining a path loss parameter of the user equipment.

Optionally, signal strength of all the user equipments is unnecessarily the same. Therefore, when the repetition quantity is determined, a signal strength level of the user equipment may be used as a parameter for calculation. Specifically, when a high signal level represents high signal strength, user equipment with a high signal level needs a smaller repetition quantity than user equipment with a low signal level.

A specific manner of calculating the repetition quantity may be other different manners used by persons skilled in the art according to actual requirements, or may be obtained by means of experiments, and this is not specifically limited herein. This application makes description by using the correspondence between a path loss and a repetition quantity as an example.

S102. The network side device determines a round trip time RTT of the user equipment according to obtained repetition quantity information of the user equipment, process quantity information of the user equipment, and a transmission time interval TTI.

Because in this embodiment of the present invention, an RTT may be set according to a requirement, a length of the RTT may be adjusted in a range allowed by a delay. In addition, a repetition quantity required by a user equipment may be learned of by using repetition quantity information of the user equipment. Therefore, for a coverage capability of each user equipment , each RTT can include as few processes as possible, provided that a requirement of the user equipment for a repetition quantity is met. In this way, a probability of successful data decoding may be efficiently improved, thereby efficiently improving a coverage capability of user equipment in wireless communication. In addition, in this embodiment of the present invention, user equipment may also adjust an HARQ process quantity according to a repetition quantity currently required by the user equipment, so that a delay of data transmission can be reduced while full use of a resource is ensured, thereby improving communication efficiency.

Optionally, in this embodiment of the present invention, that an RTT of the user equipment is determined according to obtained repetition quantity information of the user equipment, process quantity information, and a transmission time interval TTI may specifically include:

presetting a process quantity of the user equipment, and determining the RTT of the user equipment by means of calculation according to the repetition quantity of the user equipment, the process quantity of the user equipment, and the TTI.

In this embodiment of the present invention, a length of the RTT of the user equipment may be set according to an expected quantity of processes that can be included in each RTT.

Specifically, in an application scenario of this embodiment of the present invention, that is, when an E-DPDCH and an E-DPCCH in an HARQ process are sent in a simultaneous sending manner, the RTT of the user equipment may be determined by means of calculation according to a formula: RTT=Repetition quantity*Process quantity*TTI. That is, the RTT is equal to a product of the repetition quantity, the process quantity, and the TTI. For example, the TTI is 10 ms, and if the repetition quantity required by the user equipment is 8, and the preset process quantity is 4, RTT=8*4*10 ms=320 ms.

To ensure that the user equipment can perform retransmission or initial transmission in a next HARQ cycle, different repetition quantities N are corresponding to one process quantity K. The user equipment currently determines a length of an HARQ RTT according to N and K. The repetition quantity N may be determined by the user equipment according to a coverage level of the user equipment . The process quantity K may be delivered by the network side device to the user equipment.

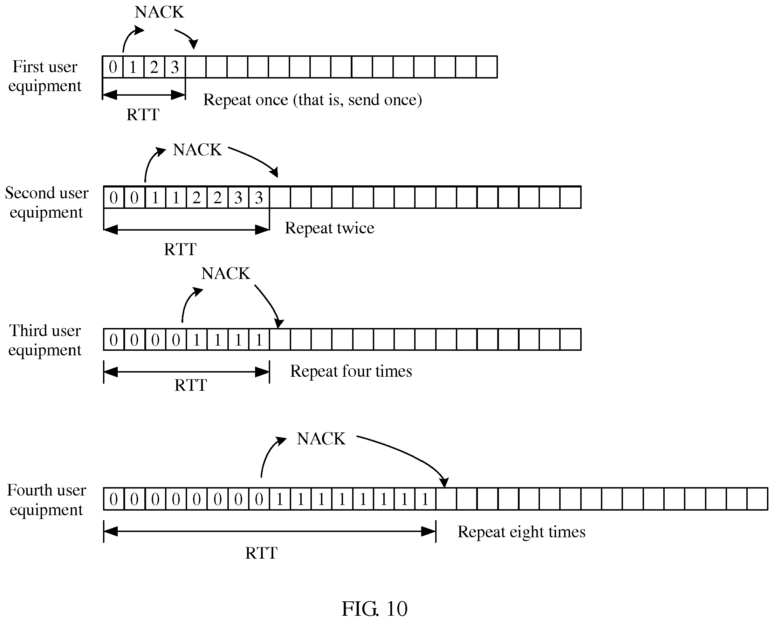

Referring to FIG. 10, in actual application, for example, a TTI is 10 ms. When a first user equipment has an extremely good coverage capability, and needs to perform sending only once, that is, a repetition quantity is 1, when the process quantity K is set to K=4, RTT=4*1*10=40 ms. When a second user equipment has slightly poor coverage capability, and a repetition quantity is 2, when the process quantity K is set to K=4, RTT=4*2*10=80 ms. When a repetition quantity of a third user equipment is 4, the process quantity K may be set to 2, and RTT=2*4*10=80 ms. When a repetition quantity of a fourth user equipment is 8, the process quantity K may be set to 2, and RTT=2*8*10=160 ms.

In another application scenario of this embodiment of the present invention, when an E-DPDCH and an E-DPCCH in an HARQ process are sent in a time division manner, the RTT of the user equipment may be determined by means of calculation according to a formula: RTT=(N1+N2+padding)*Process quantity*TTI.

N1 represents a repetition quantity of E-DPCCHs of the user equipment, N2 represents a repetition quantity of E-DPDCHs of the user equipment, padding represents a quantity of padding subframes, and padding≥0.

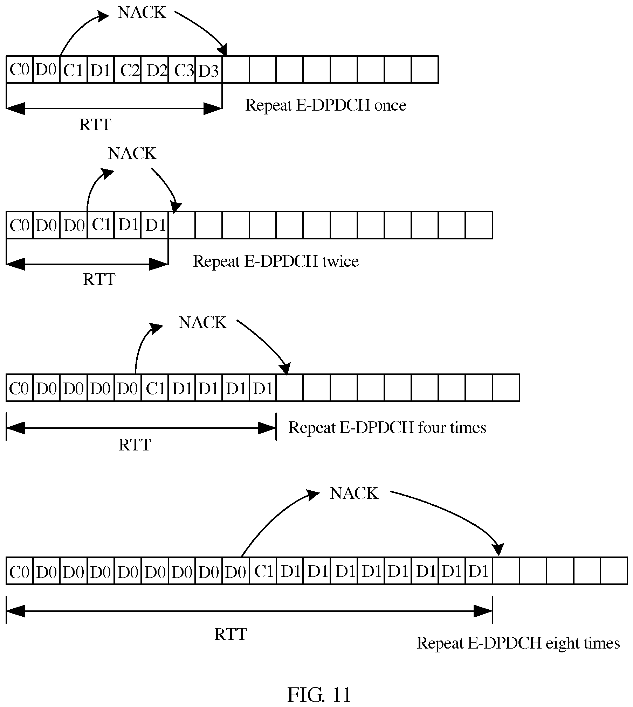

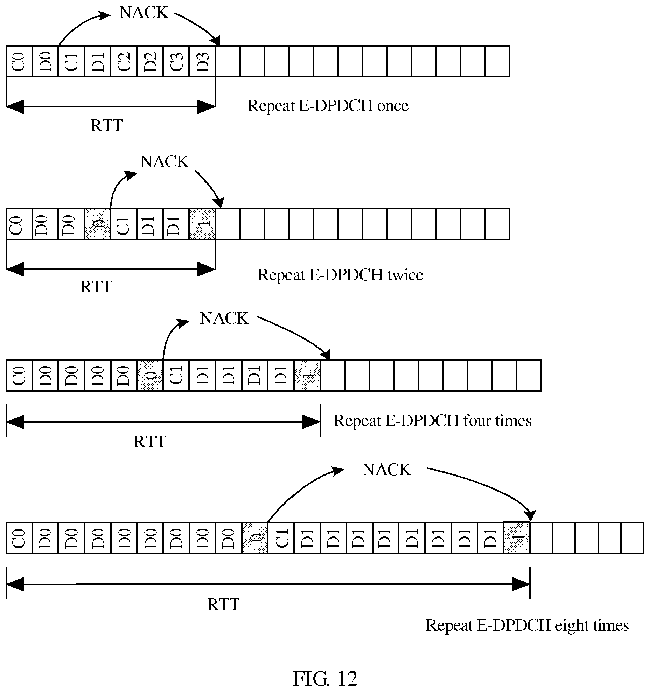

Referring to FIG. 11 and FIG. 12, in FIG. 11 and FIG. 12, C represents an E-DPCCH , D represents an E-DPDCH, digits 0, 1, and the like represent process numbers, and a shaded part represents padding. No content is transmitted in a padding part that is used as a quantity of a padding frame. A quantity of padding frames needs to be greater than or equal to 0 (that is, padding≥0). A repetition quantity of E-DPCCHs of each user equipment is N1, a repetition quantity of E-DPDCHs is N2, a process quantity is K, RTT=(N1+N2+padding)*K*10 ms, and padding≥0.

S103. The user equipment obtains a round trip time RTT of the user equipment in an HARQ, where the RTT is determined by the network side device according to the obtained repetition quantity information of the user equipment, the process quantity information of the user equipment, and the transmission time interval TTI.

In step S102, the network side device determines the round trip time RTT of the user equipment in the HARQ, and may set the process quantity for the user equipment. To determine a data format of wireless data transmission, the user equipment needs to obtain the RTT and the process quantity that are corresponding to the user equipment.

S104. The user equipment transmits data to the network side device in the RRT according to the repetition quantity.

After obtaining a process quantity of each user equipment, the user equipment may use, as a quantity of processes that can be included in each RTT, the process quantity set by the network side device, and repeatedly set these processes according to the repetition quantity required by the user equipment, to establish a complete RRT, so that the user equipment may transmit data to the network side device.

Optionally, in this embodiment of the present invention, the method may further include the following step:

S105. After receiving a feedback message, the user equipment obtains, according to a preset frame timing relationship, a first frame number that is of a sent data frame and that is corresponding to the feedback message.

Specific manners of obtaining the first frame number that is of the sent data frame and that is corresponding to the feedback message are different according to different application scenarios.

In an application scenario in which an E-DPDCH and an E-DPCCH in an HARQ process are sent in a simultaneous sending manner, after receiving the feedback message, the user equipment obtains, according to the preset frame timing relationship, the first frame number that is of the sent data frame and that is corresponding to the feedback message, and a used frame timing relationship may be specifically: First frame number of a sent data frame=First frame number of a feedback message-Repetition quantity-2.

In an application scenario in which an E-DPDCH and an E-DPCCH in a hybrid automatic repeat request HARQ process are sent in a time division manner, after receiving the feedback message, the user equipment obtains, according to the preset frame timing relationship, the first frame number that is of the sent data frame and that is corresponding to the feedback message, and a used frame timing relationship may specifically include the following two cases:

Case 1: When the E-DPDCH and E-DPCCH in the HARQ process are sent in a time division manner, and a channel sending sequence is that the E-DPCCH is first sent and then the E-DPDCH is sent, the frame timing relationship may be: First frame number of a sent data frame=First frame number of a feedback message-Repetition quantity-2. That is, if the E-DPCCH is first sent and then the E-DPDCH is sent in the HARQ process, and if a feedback message (an ACK/NACK) starts to be sent in a frame that is of an E-HICH and whose frame number is SFN#i, a start frame number that is of the E-DPDCH and that is associated with SFN#i should be SFN#(i-N2-padding-2). That is, it indicates that data starts to be sent at a location corresponding to a frame that is of the E-DPDCH and whose frame number is SFN#(i-N2-padding-2), and is repeatedly sent N2 times. After receiving all data and an ACK/NACK is obtained by means of parsing, the network side device starts to send the feedback message at a location corresponding to the frame that is of the E-HICH and whose frame name is SFN#i.

Case 2: When the E-DPDCH and the E-DPCCH in the HARQ process are sent in a time division manner, and a channel sending sequence is that the E-DPDCH is first sent and then the E-DPCCH is sent, the frame timing relationship may be:

First frame number of a sent data frame=First frame number of a feedback message-N1-N2-Padding-2. That is, if the E-DPDCH is first sent and then the E-DPCCH is sent in the HARQ process, a frame number that is of the E-DPDCH and that is associated with a frame number SFN#i of an E-HICH is SFN#(i-N1-N2-padding-2).

Optionally, in this embodiment of the present invention, the method may further include the following step:

S106. When the feedback message corresponding to the first frame number of the sent data frame is a NACK, resend, at a corresponding process location in a next RTT cycle of the HARQ, process data corresponding to the first frame number of the sent data frame.

In actual application, the wireless data transmission method in this embodiment of the present invention may be applied to wireless data transmission of an M2M service. The M2M service is relatively insensitive to a data delay and may tolerate a relatively long delay. Therefore, an RTT of relatively long specified duration may be received. In addition, most user equipments in the M2M have relatively fixed positions, so that a path loss is also relatively stable. Therefore, a repetition quantity obtained by means of calculation may not frequently change due to a position change of the user equipment.

In another embodiment of the present invention, a specific step of determining the RTT of the user equipment may be:

A round trip time RTT of a hybrid automatic repeat request HARQ is determined according to a preset maximum repetition quantity, a preset minimum process quantity, and a transmission time interval TTI, where the maximum repetition quantity is not less than a maximum value in repetition quantities of the user equipments in the management range of the network side device, and the minimum process quantity is a minimum quantity of processes in the RTT. In addition, a specific manner of determining a maximum process quantity may also be: A maximum quantity of processes that can be included in the RTT of the user equipment is determined according to duration of the RTT and the repetition quantity of the user equipment. In this embodiment of the present invention, for the specific step of determining the RTT of the user equipment and the specific manner of determining the maximum process quantity, reference may be made to the content described in Embodiment 1, and details are not repeatedly described herein.

**Embodiment 6**

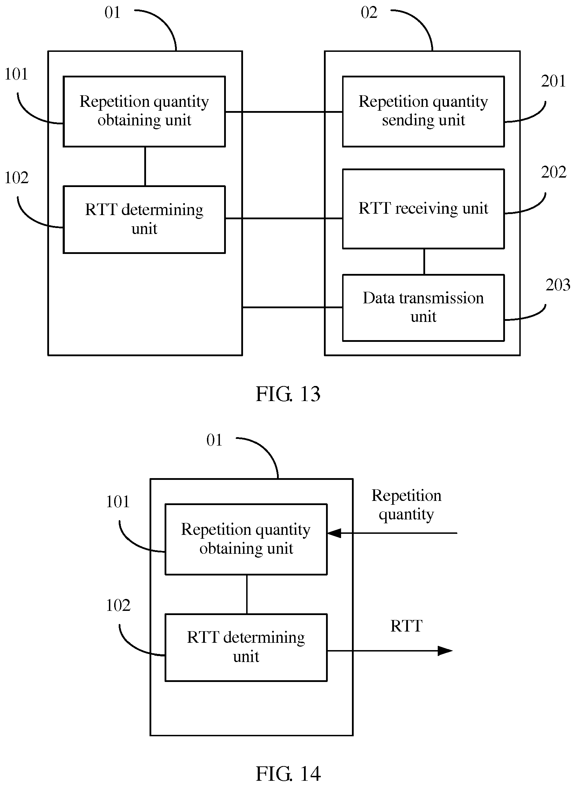

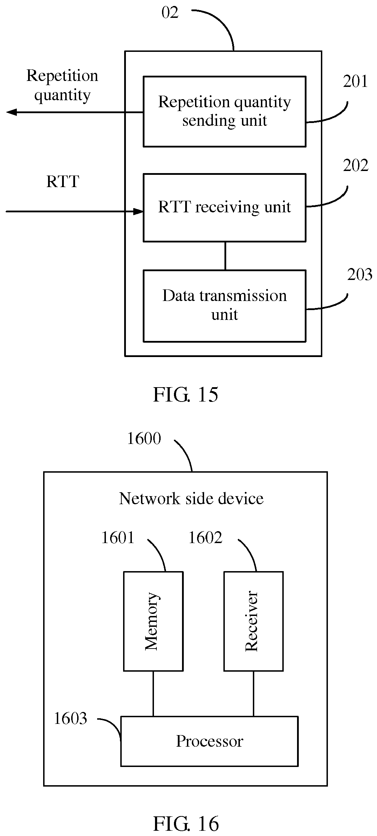

Another aspect of this embodiment of the present invention further provides a wireless data transmission system. A network side device 01 and user equipment 02 in the wireless data transmission system in this embodiment and the network side device and the user equipment in the wireless data transmission method in Embodiment 1 and Embodiment 5 have corresponding operation manners and principles and similar functions. Specifically, as shown in FIG. 13, the wireless data transmission system includes the network side device 01 and the user equipment 02. The network side device 01 is shown in FIG. 14, and includes a repetition quantity obtaining unit 101 and an RTT determining unit 102. The user equipment 02 is shown in FIG. 15, and includes a repetition quantity sending unit 201, an RTT receiving unit 202, and a data transmission unit 203.

Specifically, the repetition quantity sending unit 201 of the user equipment 02 is configured to send, to the network side device 01, a repetition quantity required for data transmission.

Optionally, a repetition quantity required for sending data by each user equipment 02 may be specifically determined by using a path loss parameter obtaining module. After a path loss parameter of the user equipment 02 is obtained by using the path loss parameter obtaining module, the repetition quantity required for sending data by the user equipment 02 may be determined according to a preset correspondence between a path loss level and a repetition quantity.

After all the user equipments 02 send repetition quantities of all the user equipments 02 to the network side device 01 by using the repetition quantity sending unit 201, the network side device 01 may obtain the repetition quantities by using the repetition quantity obtaining unit 101.

The RTT determining unit 103 in the network side device 01 may be configured to determine a round trip time RTT of the user equipment 02 according to repetition quantity information of the user equipment 02, process quantity information of the user equipment 02, and a transmission time interval TTI.

Because in this embodiment of the present invention, an RTT may be set according to a requirement, a length of the RTT may be adjusted in a range allowed by a delay. In addition, a repetition quantity required by a user equipment may be learned of by using repetition quantity information of the user equipment. Therefore, for a coverage capability of each user equipment , each RTT can include as few processes as possible, provided that a requirement of the user equipment for a repetition quantity is met. In this way, a probability of successful data decoding may be efficiently improved, thereby efficiently improving a coverage capability of user equipment in wireless communication. In addition, in this embodiment of the present invention, user equipment may also adjust an HARQ process quantity according to a repetition quantity currently required by the user equipment, so that a delay of data transmission can be reduced while full use of a resource is ensured, thereby improving communication efficiency.

Optionally, in this embodiment of the present invention, the RTT determining unit 103 may specifically include a process quantity setting module 131 and an RTT calculation module 132. The process quantity setting module 131 is configured to preset a process quantity of the user equipment 02. The RTT calculation module 132 is configured to determine the RTT of the user equipment 02 according to the repetition quantity of the user equipment 02, the process quantity of the user equipment 02, and the TTI.

Optionally, in this embodiment of the present invention, when an E-DPDCH and an E-DPCCH in an HARQ process are sent in a simultaneous sending manner, a formula used by the RTT determining module 103 to determine the RTT of the user equipment 02 by means of calculation includes: RTT=Repetition quantity*Process quantity*TTI. Alternatively, when an E-DPDCH and an E-DPCCH in an HARQ process are sent in a time division manner, a formula used by the RTT determining module 103 to determine the RTT of the user equipment 02 by means of calculation includes: RTT=(N1+N2+padding)*Process quantity*TTI. N1 represents a repetition quantity of E-DPCCHs of the user equipment, N2 represents a repetition quantity of E-DPDCHs of the user equipment, padding represents a quantity of padding subframes, and padding≥0.

In this embodiment of the present invention, the network side device 01 sets a quantity of processes that can be included in each RTT of each user equipment 02, and calculates a length of the RTT of the user equipment 02 by using the RTT determining module 103.

Specifically, in an application scenario of this embodiment of the present invention, that is, when an E-DPDCH and an E-DPCCH in an HARQ process are sent in a simultaneous sending manner, the RTT determining module 103 may calculate the RTT of the user equipment 02 by means of calculation according to a formula: RTT=Repetition quantity*Process quantity*TTI. That is, the RTT is equal to a product of the repetition quantity, the process quantity, and the TTI. For example, the TTI is 10 ms, and if the repetition quantity required by the user equipment 02 is 8, and the preset process quantity is 4, RTT=8*4*10 ms=320 ms.

To ensure that the user equipment 02 can perform retransmission or initial transmission in a next HARQ cycle, different repetition quantities N are corresponding to one process quantity K. The RTT determining module 103 determines a length of an HARQ RTT according to N and K. The repetition quantity N may be determined by the user equipment 02 according to a coverage level of the user equipment 02. The process quantity K may be delivered by the network side device 01 to the user equipment 02.

Referring to FIG. 10, in actual application, for example, a TTI is 10 ms. When a first user equipment has an extremely good coverage capability, and needs to perform sending only once, that is, a repetition quantity is 1, when the process quantity K is set to K=4, RTT=4*1*10=40 ms. When a second user equipment has slightly poor coverage capability, and a repetition quantity is 2, when the process quantity K is set to K=4, RTT=4*2*10=80 ms. When a repetition quantity of a third user equipment is 4, the process quantity K may be set to 2, and RTT=2*4*10=80 ms. When a repetition quantity of a fourth user equipment is 8, the process quantity K may be set to 2, and RTT=2*8*10=160 ms.

In another application scenario of this embodiment of the present invention, when an E-DPDCH and an E-DPCCH in an HARQ process are sent in a time division manner, the RTT determining module 13 may calculate the RTT of the user equipment according to a formula: RTT=(N1+N2+padding)*Process quantity*TTI.

N1 represents a repetition quantity of E-DPCCHs of the user equipment, N2 represents a repetition quantity of E-DPDCHs of the user equipment, padding represents a quantity of padding subframes, and padding≥0.

Referring to FIG. 11 and FIG. 12, in FIG. 11 and FIG. 12, C represents an E-DPCCH channel, D represents an E-DPDCH channel, digits 0, 1, and the like represent process numbers, and a shaded part represents padding. No content is transmitted in a padding part that is used as a quantity of padding frames. A quantity of padding needs to be greater than or equal to 0 (that is, padding≥0). A repetition quantity of E-DPCCHs of each user equipment is N1, a repetition quantity of E-DPDCHs is N2, a process quantity is K, RTT=(N1+N2+padding)*K*10 ms, and padding≥0.

The RTT receiving unit 22 obtains a round trip time RTT of the user equipment in an HARQ, where the RTT is determined by the network side device according to the obtained repetition quantity information of the user equipment, the process quantity information of the user equipment, and the transmission time interval TTI.

The network side device 01 determines the round trip time RTT of the user equipment 02 in the HARQ, and may set the process quantity for the user equipment 02. To determine a data format of wireless data transmission, the RTT receiving unit 22 may obtain the RTT and the process quantity that are corresponding to the user equipment 02.

The data transmission unit 23 transmits data to the network side device in the RRT according to the repetition quantity.

After obtaining a process quantity of each user equipment 02, the data transmission unit 23 may use, as a quantity of processes that can be included in each RTT, the process quantity set by the network side device 01, and repeatedly set these processes according to the repetition quantity required by the user equipment 02, to establish a complete RRT, so that the user equipment 02 may transmit data to the network side device 01.

Optionally, in this embodiment of the present invention, the user equipment 02 may further include a unit for obtaining a first frame number of a sent data frame (which is not shown in the figure). The unit for obtaining a first frame number of a sent data frame is configured to: after receiving a feedback message, obtain, according to a preset frame timing relationship, a first frame number that is of a sent data frame and that is corresponding to the feedback message.

Specific manners of obtaining the first frame number that is of the sent data frame and that is corresponding to the feedback message are different according to different application scenarios.

In an application scenario in which an E-DPDCH and an E-DPCCH in an HARQ process are sent in a simultaneous sending manner, after the user equipment receives the feedback message, the unit for obtaining a first frame number of a sent data frame obtains, according to the preset frame timing relationship, the first frame number that is of the sent data frame and that is corresponding to the feedback message, and a used frame timing relationship may be specifically: First frame number of a sent data frame=First frame number of a feedback message-Repetition quantity-2.

In an application scenario in which an E-DPDCH and an E-DPCCH in a hybrid automatic repeat request HARQ process are sent in a time division manner, after the user equipment receives the feedback message, the unit for obtaining a first frame number of a sent data frame obtains, according to the preset frame timing relationship, the first frame number that is of the sent data frame and that is corresponding to the feedback message, and a used frame timing relationship may specifically include the following two cases:

Case 1: When the E-DPDCH and E-DPCCH in the HARQ process are sent in a time division manner, and a channel sending sequence is that the E-DPCCH is first sent and then the E-DPDCH is sent, the frame timing relationship may be: First frame number of a sent data frame=First frame number of a feedback message-Repetition quantity-2. That is, if the E-DPCCH is first sent and then the E-DPDCH is sent in the HARQ process, and if a feedback message (an ACK/NACK) starts to be sent in a frame that is of an E-HICH and whose frame number is SFN#i, a start frame number that is of the E-DPDCH and that is associated with SFN#i should be SFN#(i-N2-padding-2). That is, it indicates that data starts to be sent at a location corresponding to a frame that is of the E-DPDCH and whose frame number is SFN#(i-N2-padding-2), and is repeatedly sent N2 times. After receiving all data and an ACK/NACK is obtained by means of parsing, the network side device starts to send the feedback message at a location corresponding to the frame that is of the E-HICH and whose frame name is SFN#i.

Case 2: When the E-DPDCH and the E-DPCCH in the HARQ process are sent in a time division manner, and a channel sending sequence is that the E-DPDCH is first sent and then the E-DPCCH is sent, the frame timing relationship may be:

First frame number of a sent data frame=First frame number of a feedback message-N1-N2-Padding-2. That is, if the E-DPDCH is first sent and then the E-DPCCH is sent in the HARQ process, a frame number that is of the E-DPDCH and that is associated with a frame number SFN#i of an EHICH is SFN#(i-N1-N2-padding-2).

Optionally, in this embodiment of the present invention, the user equipment 02 may further include a process data resending unit (which is not shown in the figure). The process data resending unit is configured to: when the feedback message corresponding to the first frame number of the sent data frame is a NACK, resend, at a corresponding process location in a next RTT cycle of the HARQ, process data corresponding to the first frame number of the sent data frame.

In actual application, the wireless data transmission system in this embodiment of the present invention may be applied to wireless data transmission of an M2M service. The M2M service is relatively insensitive to a data delay and may tolerate a relatively long delay. Therefore, an RTT of relatively long specified duration may be received. In addition, most user equipments in the M2M have relatively fixed positions, so that a path loss is also relatively stable. Therefore, a repetition quantity obtained by means of calculation may not frequently change due to a position change of the user equipment.

In another embodiment of the present invention, the RTT determining unit 103 may specifically include the RTT obtaining unit 12 shown in FIG. 3, the RTT obtaining unit 12 is configured to determine a round trip time RTT of a hybrid automatic repeat request HARQ according to a preset maximum repetition quantity, a preset minimum process quantity, and the transmission time interval TTI. The maximum repetition quantity is not less than a maximum value in repetition quantities required for data transmission of the user equipments in the management range of the network side device.

The minimum process quantity is a minimum quantity of processes in the RTT. Duration of the RTT is used together with the repetition quantity of the user equipment to determine a maximum quantity of processes that can be included in the RTT of the user equipment. In this embodiment of the present invention, for a specific operation principle of the RTT obtaining unit 12, reference may be made to the content that is about the wireless data transmission system and that is described in Embodiment 2, and details are not repeatedly described herein.

**Embodiment 7**

Referring to FIG. 16, FIG. 16 is a schematic structural diagram of hardware of a network side device according to an embodiment of the present invention. The network side device may be configured to execute the wireless data transmission methods in Embodiment 1 and Embodiment 5. The network side device 1600 includes a memory 1601, a receiver 602, and a processor 1603 separately connected to the memory 1601 and the receiver 1602. The memory 1601 is configured to store a group of program instructions. The processor 1603 is configured to invoke the program instructions stored in the memory 1601 to perform the following operations:

triggering the receiver 1602 to obtain a repetition quantity required for data transmission of each user equipment in a management range; and
determining a round trip time RTT of the user equipment according to obtained repetition quantity information of the user equipment, process quantity information of the user equipment, and a transmission time interval TTI.

Optionally, the processor 1603 may be a central processing unit (Central Processing Unit, CPU). The memory 1601 may be an internal memory of a random access memory (Random Access Memory, RAM) type. The receiver 1602 may include a common physical interface, and the physical interface may be an Ethernet (Ethernet) interface or an asynchronous transfer mode (Asynchronous Transfer Mode, ATM) interface. The processor 1603, the receiver 1602, and the memory 1601 may be integrated into one or more independent circuits or hardware, for example, an application-specific integrated circuit (Application Specific Integrated Circuit, ASIC).

**Embodiment 8**

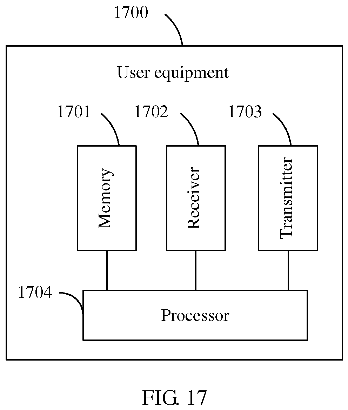

Referring to FIG. 17, FIG. 17 is a schematic structural diagram of hardware of user equipment according to an embodiment of the present invention. The user equipment may be configured to execute the wireless data transmission methods in Embodiment 1 and Embodiment 5. The user equipment 1700 includes a memory 1701, a receiver 1702, a transmitter 1703, and a processor 1704 separately connected to the memory 1701, the receiver 1702, and the transmitter 1703. The memory 1701 is configured to store a group of program instructions. The processor 1704 is configured to invoke the program instructions stored in the memory 1701 to perform the following operations:

triggering the receiver 1702 to send, to a network side device, a repetition quantity required for data transmission;
obtaining a round trip time RTT of the user equipment in a hybrid automatic repeat request HARQ, where the RTT is determined by the network side device according to obtained repetition quantity information of the user equipment, process quantity information of the user equipment, and a transmission time interval TTI; and
triggering the transmitter 170 to transmit data to the network side device in the RRT according to the repetition quantity.

Optionally, the processor 1704 may be a central processing unit (Central Processing Unit, CPU). The memory 1701 may be an internal memory of a random access memory (Random Access Memory, RAM) type. The receiver 1702 and the transmitter 1703 may include a common physical interface, and the physical interface may be an Ethernet (Ethernet) interface or an asynchronous transfer mode (Asynchronous Transfer Mode, ATM) interface. The processor 1704, the transmitter 1703, the receiver 1702, and the memory 1701 may be integrated into one or more independent circuits or hardware, for example, an application-specific integrated circuit (Application Specific Integrated Circuit, ASIC).
Persons of ordinary skill in the art may understand that all or a part of the steps of the method in the embodiments of the present invention may be implemented by a program instructing relevant hardware. The program may be stored in a computer readable storage medium. When the program runs, the steps of the method in the embodiments of the present invention are performed. The storage medium may be at least one of the following media: any media that can store program code, such as a read-only Memory (Read-Only Memory, ROM for short), a RAM, a magnetic disk, or an optical disc.
It should be noted that the embodiments in this specification are all described in a progressive manner, for same or similar parts in the embodiments, reference may be made to these embodiments, and each embodiment focuses on a difference from other embodiments. Especially, device and system embodiments are basically similar to a method embodiment, and therefore is described briefly; for related parts, reference may be made to partial descriptions in the method embodiment. The described device and system embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. Persons of ordinary skill in the art may understand and implement the embodiments of the present invention without creative efforts.

The foregoing descriptions are merely example embodiments of the present invention, but are not intended to limit the protection scope of the present invention. It should be noted that persons of ordinary skill in the art may make several improvements and polishing without departing from the principle of the present application and the improvements and polishing shall fall within the protection scope of the present application.

**Claims**

1. A wireless data transmission method, comprising:

   obtaining a repetition quantity required for data transmission of each user equipment in a management range; and
   determining a round trip time RTT of the user equipment according to obtained repetition quantity information of the user equipment, process quantity information of the user equipment, and a transmission time interval TTI.

2. The wireless data transmission method according to claim 1, wherein the determining an RTT of the user equipment according to obtained repetition quantity information of the user equipment, process quantity information, and a transmission time interval TTI comprises:

   presetting a process quantity of the user equipment; and
   determining the RTT of the user equipment by means of calculation according to the repetition quantity of the user equipment, the process quantity of the user equipment, and the TTI.

3. The wireless data transmission method according to claim 2, wherein when an enhanced dedicated physical data channel E-DPDCH and an enhanced dedicated physical control channel E-DPCCH in a hybrid automatic repeat request HARQ process are sent in a simultaneous sending manner, the determining the RTT of the user equipment by means of calculation according to the repetition quantity of the user equipment, the process quantity of the user equipment, and the TTI comprises:

$$RTT = \text{Repetition quantity} * \text{Process quantity} * TTI.$$

4. The wireless data transmission method according to claim 2, wherein when an E-DPDCH and an E-DPCCH in an HARQ process are sent in a time division manner, the determining the RTT of the user equipment by means of calculation according to the repetition quantity of the user equipment, the process quantity of the user equipment, and the TTI comprises:

$$RTT = (N1 + N2 + \text{padding}) * \text{Process quantity} * TTI; \text{ wherein}$$

   wherein N1 represents a repetition quantity of E-DPCCHs of the user equipment, N2 represents a repetition quantity of E-DPDCHs of the user equipment, padding represents a quantity of padding subframes, and padding$\geq$0.

5. The wireless data transmission method according to claim 1, wherein the determining an RTT of the user equipment according to obtained repetition quantity information of the user equipment, process quantity information, and a transmission time interval TTI comprises:

   determining the RTT of an HARQ according to a preset maximum repetition quantity, a preset minimum process quantity, and the TTI, wherein the maximum repetition quantity is not less than a maximum value in repetition quantities of the user equipments in the management range of a network side device, and the minimum process quantity is a minimum quantity of processes in the RTT.

6. The wireless data transmission method according to claim 5, comprising:

determining, according to duration of the RTT and the repetition quantity of the user equipment, a maximum quantity of processes that can be comprised in the RTT of the user equipment.

7. The wireless data transmission method according to claim 5, wherein the maximum repetition quantity is the maximum value in the repetition quantities required for data transmission of all the user equipments in the management range of the network side device.

8. The wireless data transmission method according to claim 5, wherein the repetition quantity required for data transmission of the user equipment is:

    a repetition quantity determined by the network side device according to a path loss parameter of the user equipment.

9. The wireless data transmission method according to claim 5, wherein when a TTI of data transmission is a TTI of 10 ms, the determining an RTT of an HARQ according to a maximum repetition quantity and a preset minimum process quantity comprises:

$$RTT = \text{Minimum process quantity} * \text{Maximum repetition quantity} * 10 \text{ ms}.$$

10. The wireless data transmission method according to claim 5, wherein when a TTI of data transmission is a TTI of 10 ms, that a maximum quantity of processes that can be comprised in each RTT of each user equipment is determined according to the repetition quantity required for data transmission of each user equipment and duration of the RTT comprises:

$$\text{Maximum process quantity} = RTT / (\text{Repetition quantity} * 10 \text{ ms}).$$

11. A wireless data transmission method, comprising:

    sending, by user equipment to a network side device, a repetition quantity required for data transmission;
    obtaining, by the user equipment, a round trip time RTT of the user equipment in a hybrid automatic repeat request HARQ, wherein the RTT is determined by the network side device according to obtained repetition quantity information of the user equipment, process quantity information of the user equipment, and a transmission time interval TTI; and
    transmitting, by the user equipment, data to the network side device in the RRT according to the repetition quantity.

12. The wireless data transmission method according to claim 11, further comprising: after receiving a feedback message, obtaining, by the user equipment according to a preset frame timing relationship, a first frame number that is of a sent data frame and that is corresponding to the feedback message; wherein
when an enhanced dedicated physical data channel E-DPDCH and an enhanced dedicated physical control channel E-DPCCH in a hybrid automatic repeat request HARQ process are sent in a simultaneous sending manner, the frame timing relationship comprises: First frame number of a sent data frame=First frame number of a feedback message-Repetition quantity-2; or
when an E-DPDCH and an E-DPCCH in an HARQ process are sent in a time division manner, and a channel sending sequence is that the E-DPCCH is first sent and then the E-DPDCH is sent, the frame timing relationship comprises:

    First frame number of a sent data frame=First frame number of a feedback message-N2-Padding-2; or
    when an E-DPDCH and an E-DPCCH in an HARQ process are sent in a time division manner, and a channel sending sequence is that the E-DPDCH is first sent and then the E-DPCCH is sent, the frame timing relationship comprises:

    First frame number of a sent data frame=First frame number of a feedback message-N1-N2-Padding-2; wherein
    N1 represents a repetition quantity of E-DPCCHs of the user equipment, N2 represents a repetition quantity of E-DPDCHs of the user equipment, padding represents a quantity of padding subframes, and padding$\geq$0.

**13.** The wireless data transmission method according to claim 11, further comprising:

when a feedback message corresponding to a first frame number of a sent data frame is a NACK, resending, at a corresponding process location in a next RTT cycle of the HARQ, process data corresponding to the first frame number of the sent data frame.

**14.** The wireless data transmission method according to claim 11, further comprising:

obtaining, by the user equipment, a maximum quantity of processes that can be comprised in the RTT of the user equipment in the HARQ, wherein the RTT is determined by the network side device according to a preset maximum repetition quantity and a preset minimum process quantity, the maximum repetition quantity is not less than a maximum value in repetition quantities required for sending data by user equipments in a management range of the network side device, the minimum process quantity is a minimum quantity of processes in the RTT, and duration of the RTT is used together with the repetition quantity of the user equipment to determine the maximum quantity of processes that can be comprised in the RTT of the user equipment, and the transmitting, by the user equipment, data to the network side device in the RRT according to the repetition quantity comprises:

transmitting, by the user equipment, data to the network side device in the RRT according to the maximum process quantity.

**15.** The wireless data transmission method according to claim 14, wherein the obtaining the maximum process quantity comprises:

obtaining, by the user equipment, the maximum process quantity sent from the network side device; or
generating, by the user equipment, the maximum process quantity by means of calculation.

**16.** The wireless data transmission method according to claim 14, wherein the maximum repetition quantity is the maximum value in the repetition quantities required for data transmission of all the user equipments in the management range of the network side device.

**17.** The wireless data transmission method according to claim 14, wherein the user equipment comprises:

a path loss parameter obtaining module, configured to determine the repetition quantity according to a path loss parameter of the user equipment.

**18.** The wireless data transmission method according to claim 14, wherein when a TTI of data transmission is a TTI of 10 ms, that the RTT of the HARQ is determined according to a maximum repetition quantity and a preset minimum process quantity comprises:

$$RTT = Minimum\ process\ quantity * Maximum\ repetition\ quantity * 10\ ms.$$

**19.** The wireless data transmission method according to claim 14, wherein when a TTI of data transmission is a TTI of 10 ms, that a maximum quantity of processes that can be comprised in each RTT of each user equipment is determined according to the repetition quantity required for data transmission of each user equipment and duration of the RTT comprises:

$$Maximum\ process\ quantity = RTT / (Repetition\ quantity * 10\ ms).$$

**20.** The wireless data transmission method according to claim 14, further comprising:

after receiving a feedback message, obtaining, by the user equipment according to a preset frame timing relationship, a first frame number that is of a sent data frame and that is corresponding to the feedback message; wherein
the frame timing relationship comprises: First frame number of a sent data frame=First frame number of a feedback message-Repetition quantity-2.

**21.** The wireless data transmission method according to claim 20, further comprising:

when the feedback message corresponding to the first frame number of the sent data frame is a NACK, resending, at a preset retransmission location, process data corresponding to the first frame number of the sent data frame; wherein
the preset retransmission location comprises:

when a length of the RTT is 160 ms, the repetition quantity is 8, and process quantity is 2, or when a length of the RTT is 80 ms, the repetition quantity is 4, and the process quantity is 2, or when a length of the RTT is 40 ms, the repetition quantity is 2, and the process quantity is 2, the preset retransmission location is:

$$\text{Retransmission RTT number}=\text{RTT number corresponding to a sent data frame}+2.$$

**22.** The wireless data transmission method according to any one of claims 11 to 21, wherein the wireless data transmission method is applied to wireless data transmission of a machine-to-machine M2M service.

**23.** A network side device, comprising:

a repetition quantity obtaining unit, configured to obtain a repetition quantity required for data transmission of each user equipment in a management range; and
an RTT determining unit, configured to determine a round trip time RTT of the user equipment according to obtained repetition quantity information of the user equipment, process quantity information of the user equipment, and a transmission time interval TTI.

**24.** The network side device according to claim 23, wherein the RTT determining unit comprises:

a process quantity setting module, configured to preset a process quantity of the user equipment; and
an RTT calculation module, configured to determine the RTT of the user equipment by means of calculation according to the repetition quantity of the user equipment, the process quantity of the user equipment, and the TTI.

**25.** The network side device according to claim 23, wherein when an enhanced dedicated physical data channel E-DPDCH and an enhanced dedicated physical control channel E-DPCCH in a hybrid automatic repeat request HARQ process are sent in a simultaneous sending manner, a formula used by the RTT determining module to determine the RTT of the user equipment by means of calculation comprises:

$$\text{RTT}=\text{Repetition quantity}*\text{Process quantity}*\text{TTI.}$$

**26.** The network side device according to claim 23, wherein when an E-DPDCH and an E-DPCCH in an HARQ process are sent in a time division manner, a formula used by the RTT determining module to determine the RTT of the user equipment comprises:

$$\text{RTT}=(N1+N2+padding)*\text{Process quantity}*\text{TTI; wherein}$$

N1 represents a repetition quantity of E-DPCCHs of the user equipment, N2 represents a repetition quantity of E-DPDCHs of the user equipment, padding represents a quantity of padding subframes, and $padding \geq 0$.

**27.** The network side device according to claim 23, wherein the RTT determining unit comprises:

an RTT obtaining unit, configured to determine the round trip time RTT of a hybrid automatic repeat request HARQ according to a preset maximum repetition quantity, a preset minimum process quantity, and the transmission time interval TTI, wherein the maximum repetition quantity is not less than a maximum value in repetition quantities required for data transmission of the user equipments in the management range of the network side device, the minimum process quantity is a minimum quantity of processes in the RTT, and duration of the RTT is used together with the repetition quantity of the user equipment to determine a maximum quantity of processes that can be comprised in the RTT of the user equipment.

28. The network side device according to claim 23, wherein the maximum repetition quantity is a maximum value in repetition quantities required for data transmission of all the user equipments in the management range of the network side device.

29. The network side device according to claim 23, wherein the repetition quantity required for data transmission of the user equipment is:

a repetition quantity determined by the network side device according to a path loss parameter of the user equipment.

30. The network side device according to claim 23, wherein when a TTI of data transmission is a TTI of 10 ms, that the RTT of an HARQ is determined according to a maximum repetition quantity and a preset minimum process quantity comprises:

$$RTT=\text{Minimum process quantity}*\text{Maximum repetition quantity}*10\ ms.$$

31. The network side device according to claim 23, wherein when a TTI of data transmission is a TTI of 10 ms, that a maximum quantity of processes that can be comprised in each RTT of each user equipment is determined according to the repetition quantity required for data transmission of each user equipment and duration of the RTT comprises:

$$\text{Maximum process quantity}=RTT/(\text{Repetition quantity}*10\ ms).$$

32. User equipment, comprising:

a repetition quantity sending unit, configured to send, by the user equipment to a network side device, a repetition quantity required for data transmission;
an RTT receiving unit, configured to obtain a round trip time RTT of the user equipment in a hybrid automatic repeat request HARQ, wherein the RTT is determined by the network side device according to obtained repetition quantity information of the user equipment, process quantity information of the user equipment, and a transmission time interval TTI; and
a data transmission unit, configured to transmit data to the network side device in the RRT according to the repetition quantity.

33. The user equipment according to claim 32, further comprising:

a unit for obtaining a first frame number of a sent data frame, configured to: after receiving a feedback message, obtain, according to a preset frame timing relationship, a first frame number that is of a sent data frame and that is corresponding to the feedback message; wherein
when an enhanced dedicated physical data channel E-DPDCH and an enhanced dedicated physical control channel E-DPCCH in a hybrid automatic repeat request HARQ process are sent in a simultaneous sending manner, the frame timing relationship comprises: First frame number of a sent data frame=First frame number of a feedback message-Repetition quantity-2; or
when an E-DPDCH and an E-DPCCH in a hybrid automatic repeat request HARQ process are sent in a time division manner, and a channel sending sequence is that the E-DPCCH is first sent and then the E-DPDCH is sent, the frame timing relationship comprises:

First frame number of a sent data frame=First frame number of a feedback message-N2-Padding-2; or
when an E-DPDCH and an E-DPCCH in a hybrid automatic repeat request HARQ process are sent in a time division manner, and a channel sending sequence is that the E-DPDCH is first sent and then the E-DPCCH is sent, the frame timing relationship comprises:

First frame number of a sent data frame=First frame number of a feedback message-N1-N2-Padding-2; wherein

N1 represents a repetition quantity of E-DPCCHs of the user equipment, N2 represents a repetition quantity of E-DPDCHs of the user equipment, padding represents a quantity of padding subframes, and padding≥0.

**34.** The user equipment according to claim 32, further comprising:

a process data resending unit, configured to: when a feedback message corresponding to a first frame number of a sent data frame is a NACK, resend, at a corresponding process location in a next RTT cycle of the HARQ, process data corresponding to the first frame number of the sent data frame.

**35.** The user equipment according to claim 32, further comprising:

a maximum process quantity obtaining unit, configured to obtain a maximum quantity of processes that can be comprised in the round trip time RTT of the user equipment in the hybrid automatic repeat request HARQ, wherein the RTT is determined by the network side device according to a preset maximum repetition quantity and a preset minimum process quantity, the maximum repetition quantity is not less than a maximum value in repetition quantities required for sending data by user equipments in a management range of the network side device, the minimum process quantity is a minimum quantity of processes in the RTT, and duration of the RTT is used together with the repetition quantity of the user equipment to determine the maximum quantity of processes that can be comprised in the RTT of the user equipment; wherein
the data transmission unit is configured to transmit data to the network side device in the RRT according to the maximum process quantity.

**36.** The user equipment according to claim 35, wherein the repetition quantity sending unit comprises:

a path loss parameter obtaining module, configured to determine the repetition quantity according to a path loss parameter of the user equipment.

**37.** The user equipment according to claim 35, wherein the maximum process quantity obtaining unit comprises:

a maximum process quantity receiving module, configured to receive the maximum process quantity sent from the network side device; or
a maximum process quantity calculation module, configured to generate the maximum process quantity by means of calculation.

**38.** The user equipment according to claim 35, wherein the maximum repetition quantity is the maximum value in the repetition quantities required for data transmission of all the user equipments in the management range of the network side device.

**39.** The user equipment according to claim 35, wherein the repetition quantity required for data transmission of the user equipment is:

a repetition quantity determined by the network side device according to a path loss parameter of the user equipment.

**40.** The user equipment according to claim 35, wherein when a TTI of data transmission is a TTI of 10 ms, that the RTT of the HARQ is determined according to a maximum repetition quantity and a preset minimum process quantity comprises:

$$RTT = \text{Minimum process quantity} * \text{Maximum repetition quantity} * 10 \text{ ms.}$$

**41.** The user equipment according to claim 35, wherein when a TTI of data transmission is a TTI of 10 ms, that a maximum quantity of processes that can be comprised in each RTT of each user equipment is determined according to the repetition quantity required for data transmission of each user equipment and duration of the RTT comprises:

$$\text{Maximum process quantity} = \text{RTT}/(\text{Repetition quantity}*10 \text{ ms}).$$

**42.** The user equipment according to claim 35, further comprising:

a first frame number obtaining unit, configured to: after receiving a feedback message, obtain, according to a preset frame timing relationship, a first frame number that is of a sent data frame and that is corresponding to the feedback message; wherein

the frame timing relationship comprises: First frame number of a sent data frame=First frame number of a feedback message-Repetition quantity-2.

**43.** The user equipment according to claim 35, further comprising:

a retransmission unit, configured to: when the feedback message corresponding to the first frame number of the sent data frame is a NACK, resend, at a preset retransmission location, process data corresponding to the first frame number of the sent data frame; wherein

the preset retransmission location comprises:

when a length of the RTT is 160 ms, the repetition quantity is 8, and the process quantity is 2, or when a length of the RTT is 80 ms, the repetition quantity is 4, and the process quantity is 2, or when a length of the RTT is 40 ms, the repetition quantity is 2, and the process quantity is 2, the preset retransmission location is:

$$\text{Retransmission RTT number} = \text{RTT number corresponding to a sent data frame} + 2.$$

**44.** The user equipment according to any one of claims 32 to 43, wherein the user equipment is applied to wireless data transmission of a machine-to-machine M2M service.

**45.** A wireless data transmission system, comprising: the network side device according to any one of claims 23 to 31, and the user equipment according to any one of claims 32 to 44.

| | |
|---|---|
| A network side device obtains a repetition quantity required for data transmission of each user equipment in a management range | S11 |
| Determine an RTT of an HARQ according to a maximum repetition quantity, a minimum process quantity, and a TTI | S12 |
| Determine a maximum quantity of processes that can be included in each RTT of the user equipment | S13 |
| The user equipment transmits data to the network side device in the RRT according to the maximum process quantity | S14 |
| The user equipment obtains, according to a preset frame timing relationship, a first frame number that is of a sent data frame and that is corresponding to a feedback message | S15 |
| When the feedback message is a NACK, the user equipment resends sent data at a preset retransmission location | S16 |

FIG. 1

| A network side device obtains a repetition quantity required for data transmission of each user equipment in a management range | S21 |

| The network side device determines an RTT of an HARQ according to a maximum repetition quantity, a minimum process quantity, and a TTI | S22 |

FIG. 2

| User equipment sends, to a network side device, a repetition quantity required for data transmission | S31 |

| The user equipment obtains a maximum quantity of processes that can be included in an RTT of the user equipment in an HARQ | S32 |

| The user equipment transmits data to the network side device in the RRT according to the maximum process quantity | S33 |

FIG. 3

01

02

11

Repetition quantity
obtaining unit

12

RTT obtaining unit

21

Repetition quantity
sending unit

22

Maximum process
quantity obtaining
unit

23

Data transmission
unit

FIG. 4

01

11

Repetition quantity
obtaining unit

12

RTT obtaining unit

Repetition
quantity

RTT

FIG. 5

02

Repetition
quantity

| Repetition quantity sending unit | 21 |

RTT

| Maximum process quantity obtaining unit | 22 |

| Data transmission unit | 23 |

FIG. 6

700

Network side device

701        702

| Memory | Receiver |

703 ── | Processor |

FIG. 7

800

User equipment

801 802 803

Memory    Receiver    Transmitter

804

Processor

FIG. 8

A network side device obtains a repetition quantity required for data transmission of each user equipment in a management range

S101

The network side device determines a round trip time RTT of the user equipment

S102

The user equipment obtains the round trip time RTT of the user equipment in an HARQ

S103

The user equipment transmits data to the network side device in the RRT according to the repetition quantity

S104

After receiving a feedback message, the user equipment obtains, according to a preset frame timing relationship, a first frame number that is of a sent data frame and that is corresponding to the feedback message

S105

When the feedback message corresponding to the first frame number of the sent data frame is a NACK, resend, at a preset retransmission location, process data corresponding to the first frame number of the sent data frame

S106

FIG. 9

FIG. 10

FIG. 11

FIG. 12

01

02

101

Repetition quantity
obtaining unit

201

Repetition quantity
sending unit

102

RTT determining
unit

202

RTT receiving unit

203

Data transmission
unit

FIG. 13

01

101

Repetition quantity
obtaining unit

Repetition
quantity

102

RTT determining
unit

RTT

FIG. 14

02

Repetition
quantity

Repetition quantity
sending unit

201

RTT

RTT receiving unit

202

Data transmission
unit

203

**FIG. 15**

1600

Network side device

1601

1602

Memory

Receiver

1603

Processor

**FIG. 16**

1700

User equipment

1701  1702  1703

| Memory | Receiver | Transmitter |

1704

Processor

FIG. 17

# INTERNATIONAL SEARCH REPORT

| | International application No. |
|---|---|
| | PCT/CN2015/080288 |

### A. CLASSIFICATION OF SUBJECT MATTER

H04L 1/18 (2006.01) i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, VEN, 3GPP, IEEE: RTT, TTI, hybrid automatic repeat request, HARQ, repeat, transmission, time, interval, round trip time, process

### C. DOCUMENTS CONSIDERED TO BE RELEVANT

| Category* | Citation of document, with indication, where appropriate, of the relevant passages | Relevant to claim No. |
|---|---|---|
| A | CN 102255709 A (ZTE CORP.) 23 November 2011 (23.11.2011) description, paragraphs [0028]-[0034] | 1-45 |
| A | CN 102648598 A (PANASONIC CORP.) 22 August 2012 (22.08.2012) the whole document | 1-45 |
| A | CN 101369878 A (DATANG MOBILE COMM EQUIP CO., LTD.) 18 February 2009 (18.02.2009) the whole document | 1-45 |
| A | CN 102246453 A (RESEARCH IN MOTION LTD.) 16 November 2011 (16.11.2011) the whole document | 1-45 |
| A | WO 2012052911 A1 (NOKIA CORP. et al) 16 April 2012 (26.04.2012) the whole document | 1-45 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 September 2015 | 10 September 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Tingting<br><br>Telephone No. (86-10) 62412161 |
|---|---|

Form PCT/ISA /210 (second sheet) (July 2009)

**INTERNATIONAL SEARCH REPORT**
Information on patent family members

International application No.

PCT/CN2015/080288

| Patent Documents referred in the Report | Publication Date | Patent Family | Publication Date |
|---|---|---|---|
| CN 102255709 A | 23 November 2011 | WO 2011143895 A1 | 24 November 2011 |
| CN 102648598 A | 22 August 2012 | EP 2648357 A1 | 09 October 2013 |
| | | US 8837440 B2 | 16 September 2014 |
| | | EP 2306665 A1 | 06 April 2011 |
| | | WO 2011038801 A2 | 07 April 2011 |
| | | WO 2011038801 A3 | 30 June 2011 |
| | | JP 5657006 B2 | 21 January 2015 |
| | | AU 2010301594 B2 | 28 May 2015 |
| | | US 2014348056 A1 | 27 November 2014 |
| | | JP 2013506367 A | 21 February 2013 |
| | | RU 2012112216 A | 20 November 2013 |
| | | KR 20120081995 A | 20 July 2012 |
| | | US 2012201229 A1 | 09 August 2012 |
| | | CN 102648598 B | 17 June 2015 |
| | | AU 2010301594 A1 | 26 April 2012 |
| | | EP 2484041 A2 | 08 August 2012 |
| | | JP 2015092676 A | 14 May 2015 |
| | | AU 2010301594 A2 | 17 May 2012 |
| CN 101369878 A | 18 February 2009 | CN 101369878 B | 18 April 2012 |
| CN 102246453 A | 16 November 2011 | BRPI 0923516 A2 | 07 July 2015 |
| | | MX 2011006448 A | 27 September 2011 |
| | | KR 101243551 B1 | 20 March 2013 |
| | | CA 2749574 A1 | 01 July 2010 |
| | | AU 2009330308 B2 | 06 December 2012 |
| | | WO 2010075102 A1 | 01 July 2010 |
| | | JP 2012512611 A | 31 May 2012 |
| | | SG 172147 A1 | 28 July 2011 |
| | | US 8448036 B2 | 21 May 2013 |

Form PCT/ISA/210 (patent family annex) (July 2009)

## INTERNATIONAL SEARCH REPORT
### Information on patent family members

| | International application No. |
|---|---|
| | PCT/CN2015/080288 |

| Patent Documents referred in the Report | Publication Date | Patent Family | Publication Date |
|---|---|---|---|
| | | AU 2009330308 A1 | 14 July 2011 |
| | | CA 2749574 C | 19 August 2014 |
| | | KR 20110095959 A | 25 August 2011 |
| | | CN 102246453 B | 25 February 2015 |
| | | US 2010153804 A1 | 17 June 2010 |
| | | JP 5285785 B2 | 11 September 2013 |
| | | EP 2377261 A1 | 19 October 2011 |
| WO 2012052911 A1 | 26 April 2012 | None | |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2014094209 W

- CN 2014085932 W